(19) Europäisches Patentamt
European Patent Office
Office européen des brevets

(11) **EP 4 229 903 B1**

(12) **EUROPEAN PATENT SPECIFICATION**

(45) Date of publication and mention
of the grant of the patent:
**13.03.2024 Bulletin 2024/11**

(21) Application number: **21795043.5**

(22) Date of filing: **14.10.2021**

(51) International Patent Classification (IPC):
**H04W 28/02** (2009.01)

(52) Cooperative Patent Classification (CPC):
**H04W 28/0278; H04W 28/0231**

(86) International application number:
**PCT/SE2021/051008**

(87) International publication number:
**WO 2022/081075 (21.04.2022 Gazette 2022/16)**

(54) **WIRELESS DEVICE, NETWORK NODE, AND METHODS PERFORMED THEREBY, FOR HANDLING UPLINK TRANSMISSION**

DRAHTLOSE VORRICHTUNG, NETZWERKKNOTEN UND DAMIT DURCHGEFÜHRTE VERFAHREN ZUR HANDHABUNG VON UPLINK-ÜBERTRAGUNG

DISPOSITIF SANS FIL, NOEUD DE RÉSEAU ET PROCÉDÉS EXÉCUTÉS PAR LE DISPOSITIF SANS FIL ET DESTINÉS À TRAITER UNE TRANSMISSION EN LIAISON MONTANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2020 US 202063091951 P**

(43) Date of publication of application:
**23.08.2023 Bulletin 2023/34**

(73) Proprietor: **Telefonaktiebolaget LM Ericsson (publ)**
**164 83 Stockholm (SE)**

(72) Inventors:
• **FELTRIN, Luca**
**171 47 Solna (SE)**
• **HÖGLUND, Andreas**
**170 62 Solna (SE)**
• **TIRRONEN, Tuomas**
**00950 Helsinki (FI)**
• **CHRISTOFFERSSON, Jan**
**975 61 Luleå (SE)**

(74) Representative: **Ericsson**
**Patent Development**
**Torshamnsgatan 21-23**
**164 80 Stockholm (SE)**

(56) References cited:
**US-A1- 2020 314 893**

• **SAMSUNG: "Overall procedure for data transfer in inactive state", 3GPP DRAFT; R2-168051, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 4 November 2016 (2016-11-04), XP051192344, Retrieved from the Internet: URL:http://www.3gpp.org/ftp/tsg_ran/WG2_RL 2/TSGR2_96/Docs/ [retrieved on 2016-11-04]**
• **INTERDIGITAL COMMUNICATIONS: "Uplink Data Transmissions in Inactive State", 3GPP DRAFT; R2-1700469 (NR SI AI3222 DATATRANSMISSIONS INACTIVE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Spokane, Wa; 20170117 - 20170119 7 January 2017 (2017-01-07), XP051204022, Retrieved from the Internet: URL:http://www.3gpp.org/ftp/tsg_ran/WG2_RL 2/TSGR2_AHs/2017_01_NR/Docs/ [retrieved on 2017-01-07]**

- **QUALCOMM INCORPORATED: "RACH based NR small data transmission", 3GPP DRAFT; R2-2007540, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Online; 20200817 - 20200828 7 August 2020 (2020-08-07), XP051912256, Retrieved from the Internet: URL:https://ftp.3gpp.org/tsg_ran/WG2_RL2/T SGR2_111-e/Docs/R2-2007540.zip R2-2007540.docx [retrieved on 2020-08-07]**

## Description

### TECHNICAL FIELD

The present disclosure relates generally to a wireless device and methods performed thereby for handling uplink transmission to a network node. The present disclosure further relates generally to a network node, and methods performed thereby for handling uplink transmission to the network node.

### BACKGROUND

Wireless devices within a wireless communications network may be e.g., User Equipments (UE), stations (STAs), mobile terminals, wireless terminals, terminals, and/or Mobile Stations (MS). Wireless devices are enabled to communicate wirelessly in a cellular communications network or wireless communication network, sometimes also referred to as a cellular radio system, cellular system, or cellular network. The communication may be performed e.g., between two wireless devices, between a wireless device and a regular telephone and/or between a wireless device and a server via a Radio Access Network (RAN) and possibly one or more core networks, comprised within the wireless communications network. Wireless devices may further be referred to as mobile telephones, cellular telephones, laptops, or tablets with wireless capability, just to mention some further examples. The wireless devices in the present context may be, for example, portable, pocket-storable, hand-held, computer-comprised, or vehicle-mounted mobile devices, enabled to communicate voice and/or data, via the RAN, with another entity, such as another terminal or a server.

The wireless communications network covers a geographical area which may be divided into cell areas, each cell area being served by a network node, which may be an access node such as a radio network node, radio node or a base station, e.g., a Radio Base Station (RBS), which sometimes may be referred to as e.g., gNB, evolved Node B ("eNB"), "eNodeB", "NodeB", "B node", Transmission Point (TP), or BTS (Base Transceiver Station), depending on the technology and terminology used. The base stations may be of different classes such as e.g., Wide Area Base Stations, Medium Range Base Stations, Local Area Base Stations, Home Base Stations, pico base stations, etc..., based on transmission power and thereby also cell size. A cell is the geographical area where radio coverage is provided by the base station or radio node at a base station site, or radio node site, respectively. One base station, situated on the base station site, may serve one or several cells. Further, each base station may support one or several communication technologies. The base stations communicate over the air interface operating on radio frequencies with the terminals within range of the base stations. The wireless communications network may also be a non-cellular system, comprising network nodes which may serve receiving nodes, such as wireless devices, with serving beams. In 3rd Generation Partnership Project (3GPP) Long Term Evolution (LTE), base stations, which may be referred to as eNodeBs or even eNBs, may be directly connected to one or more core networks. In the context of this disclosure, the expression Downlink (DL) may be used for the transmission path from the base station to the wireless device. The expression Uplink (UL) may be used for the transmission path in the opposite direction i.e., from the wireless device to the base station.

The standardization organization 3GPP is currently in the process of specifying a New Radio (NR) interface called NR or 5G-UTRA, as well as a Fifth Generation (5G) Packet Core Network, which may be referred to as Next Generation (NG) Core Network, abbreviated as NG-CN, NGC or 5G CN.

Internet of Things (IoT)

The Internet of Things (IoT) may be understood as an internetworking of communication devices, e.g., physical devices, vehicles, which may also be referred to as "connected devices" and "smart devices", buildings and other items-embedded with electronics, software, sensors, actuators, and network connectivity that may enable these objects to collect and exchange data. The IoT may allow objects to be sensed and/or controlled remotely across an existing network infrastructure.

"Things," in the IoT sense, may refer to a wide variety of devices such as heart monitoring implants, biochip transponders on farm animals, electric clams in coastal waters, automobiles with built-in sensors, DNA analysis devices for environmental/food/pathogen monitoring, or field operation devices that may assist firefighters in search and rescue operations, home automation devices such as the control and automation of lighting, heating, e.g. a "smart" thermostat, ventilation, air conditioning, and appliances such as washer, dryers, ovens, refrigerators or freezers that may use telecommunications for remote monitoring. These devices may collect data with the help of various existing technologies and then autonomously flow the data between other devices.

It is expected that in a near future, the population of IoT devices will be very large. Various predictions exist, among which one assumes that there will be >60000 devices per square kilometer, and another assumes that there will be 1000000 devices per square kilometer. A large fraction of these devices is expected to be stationary, e.g., gas and electricity meters, vending machines, etc.

Machine Type Communication (MTC)

Machine Type Communication (MTC) has in recent years, especially in the context of the Internet of Things (IoT), shown to be a growing segment for cellular technologies. An MTC device may be a communication device, typically a wireless communication device or simply user equipment, that is a self and/or automatically controlled unattended machine and that is typically not associated with an active human user in order to generate data traffic. An MTC device may be typically simpler, and typically associated with a more specific application or purpose, than, and in contrast to, a conventional mobile phone or smart phone. MTC involves communication in a wireless communication network to and/or from MTC devices, which communication typically may be of quite different nature and with other requirements than communication associated with e.g., conventional mobile phones and smart phones. In the context of and growth of the IoT, it is evident that MTC traffic will be increasing and thus needs to be increasingly supported in wireless communication systems.

Small data transmission

NR supports Radio Resource Control (RRC)_INACTIVE state and UEs with infrequent, e.g., periodic and/or non-periodic, data transmission may be generally maintained by the network in the RRC_INACTIVE state. Until Rel-16, the RRC_INACTIVE state does not support data transmission. Hence, the UE has to resume the connection, that is, move to RRC_CONNECTED state for any DL, Mobile terminated (MT), and UL, Mobile originated (MO), data. Connection setup and subsequently release to INACTIVE state may happen for each data transmission however small and infrequent the data packets may be. This results in unnecessary power consumption and signalling overhead.

Specific examples of small and infrequent data traffic may include the following use cases. For smartphone applications: traffic from Instant Messaging (IM) services, e.g., WhatsApp, QQ, WeChat etc, heart-beat/keep-alive traffic from IM/email clients and other apps, and push notifications from various applications. For non-smartphone applications: traffic from wearables, e.g., periodic positioning information etc, sensors, e.g., Industrial Wireless Sensor Networks transmitting temperature, pressure readings periodically or in an event triggered manner etc, and smart meters and smart meter networks sending periodic meter readings.

As noted in 3GPP TS 22.891, the NR system may be required to: be efficient and flexible for low throughput short data bursts, support efficient signalling mechanisms, e.g., signalling may be less than payload, and/or reduce signalling overhead in general.

Signalling overhead from INACTIVE state UEs for small data packets is a general problem and will become a critical issue with more UEs in NR, not only for network performance and efficiency, but also for the UE battery performance. In general, any device that has intermittent small data packets in INACTIVE state may benefit from enabling small data transmission in INACTIVE.

The key enablers for small data transmission in NR, namely the INACTIVE state, 2-step, 4-step Random Access Channel (RACH) and configured grant type-1 have already been specified as part of Rel-15 and Rel-16.

A new Work Item (WI) RP-200954 'New Work Item on NR small data transmissions in INACTIVE state' has been approved in 3GPP with the focus of optimizing the transmission for small data payloads by reducing the signaling overhead. The WI contains the following objectives. This work item may enable small data transmission in RRC_INACTIVE state as follows. For the RRC_INACTIVE state, UL small data transmissions for RACH-based schemes, i.e., 2-step and 4-step RACH, first, general procedure to enable UP data transmission for small data packets from INACTIVE state, e.g., using MSGA or MSG3, [RAN2]. Second, enable flexible payload sizes larger than the Rel-16 Common Control Channel (CCCH) message size that is possible currently for INACTIVE state for MSGA and MSG3 to support UP data transmission in UL. Actual payload size may be up to network configuration [RAN2]. Third, context fetch and data forwarding, with and without anchor relocation, in INACTIVE state for RACH-based solutions [RAN2, RAN3]. As a note, the security aspects of the above solutions may need to be checked with SA3.

Also for the RRC_INACTIVE state, this work item may, first, enable transmission of UL data on pre-configured Physical Uplink Shared Channel (PUSCH) resources, i.e., reusing the configured grant type 1, when Timing Advance (TA) is valid. Second, general procedure for small data transmission over configured grant type 1 resources from INACTIVE state [RAN2]. Third, configuration of the configured grant type1 resources for small data transmission in UL for INACTIVE state [RAN2].

For Narrow Band IoT (NB-IoT) and LTE for Machines (LTE-M), similar signaling optimizations for small data have been introduced through Rel-15 Early Data Transmission (EDT) and Rel-16 Preconfigured Uplink Resources (PUR). Somewhat similar solutions may be expected for NR with the difference that the Rel-17 NR Small Data may only be supported for RRC INACTIVE state, may include also 2-step RACH based small data, and that may be required to also include regular complexity Mobile BroadBand (MBB) UEs. Both may support MO traffic only.

Within the context of Small Data Transmission (SDT) the possibility of transmitting subsequent data has been discussed, meaning transmission of further segments of the data that may not be able to fit in the Message (Msg) 3 (Msg3) Transport Block. Such segments of data may be transmitted either in RRC_CONNECTED, as in legacy after the 4-step RACH procedure has been completed, or they may be transmitted in RRC_INACTIVE before the UE transitions to RRC_CONNECTED. In the former case, the transmission may be more efficient, as the gNB and UE may be appropriately configured based on the current UE channel conditions, while in the latter case several optimizations may not be in place yet, especially if the UE may have moved while not connected, and also the transmission may collide with the transmission from other UEs as the contention has not been resolved yet.

The Work Item has already started in the 3GPP meeting RAN2#111-e, and the following relevant agreements have already been made [2]. First, small data transmission with RRC message may be supported as baseline for Random Access (RA)-based and Configured Grant (CG) based schemes. Second, the 2-step RACH or 4-step RACH may need to be applied to RACH based uplink small data transmission in RRC_INACTIVE. Third, the uplink small data may be sent in MSGA of 2-step RACH or msg3 of 4-step RACH. Fourth, small data transmission may be configured by the network on a per Data Radio Bearer (DRB) basis. Fifth, a data volume threshold may be used for the UE to decide whether to do SDT or not. For Further Study (FFS) how to calculate data volume. Sixth, FFS if an "additional SDT specific" Reference Signal Received Power (RSRP) threshold may be further used to determine whether the UE should do SDT. Seventh, UL/DL transmission following UL SDT without transitioning to RRC_CONNECTED may be supported. Eighth, when UE is in RRC_INACTIVE, it may be possible to send multiple UL and DL packets as part of the same SDT mechanism and without transitioning to RRC_CONNECTED on dedicated grant. FFS on details and whether any indication to network may be needed.

It may be noted that some of the mechanisms discussed herein may have been already agreed upon, and while they do not represent the object of the embodiments, they may serve the purpose of presenting a complete working solution.

4-step RACH and RRC Procedures

From the Radio Resource Control (RRC) layer point of view, the UE may be camping in the cell in either one of three different states, RRC_IDLE, RRC_INACTIVE and RRC_CONNECTED.

In RRC_IDLE, the UE may be understood to not be connected to the Core Network (CN), but a series of mechanisms may allow the UE to monitor the Paging channel while saving energy. In RRC_CONNECTED, the UE may be understood to be connected to the CN and it may perform unicast data transfer. Usually, in this state, the UE may monitor more frequently the downlink control channel in order to react quickly to DL transmissions; however, by doing so, it may consume more energy. RRC_INACTIVE may be understood to be a new state introduced in NR which may put together aspects from the other two states. In fact, the UE may be connected to the CN, but it may also be configured to save energy by employing a behavior similar to the one in RRC_IDLE.

In the remainder of this document, and in the scope of the aforementioned work item, it may be assumed that the UE may be camping in the cell in RRC_INACTIVE and it may move to RRC_CONNECT to perform some of the data transfers required.

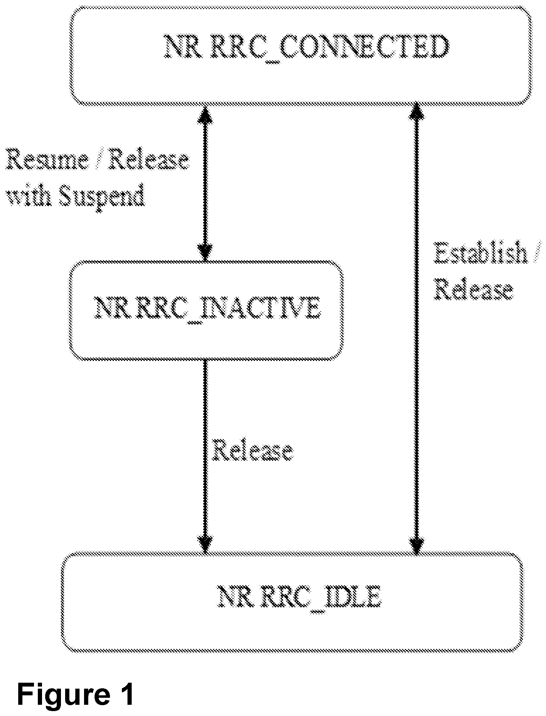

The transition from one state to another may be controlled by the RRC layer, and specifically by the gNB, which may send appropriate messages to confirm the state transition. In Figure 1, taken from 3GPP TS 38.331, v. 16.0.0 all the possible state transitions are shown with the relative RRC Message. Figure 1 is a schematic diagram depicting UE state machine and state transitions in NR. As depicted, a UE may move from NR RRC_IDLE to NR RRC_CONNECTED with an establish indication, and move from NR RRC_CONNECTED to NR RRC_IDLE with a RRCRelease indication. A UE may move from NR RRC_INACTIVE to NR RRC_IDLE with a RRCRelease indication.

In the scope of this document, the following cases may be considered. If the UE is in RRC_INACTIVE and receives an RRCRelease with suspendConfig indication, it may be understood to stay in RRC_INACTIVE. If the UE is in RRC_INACTIVE and receives an RRCResume, it may be understood to move to RRC_CONNECTED. If the UE is in RRC_CONNECTED and receives an RRCRelease with Suspend indication it may be understood to move to RRC_INACTIVE.

The 4-step RACH procedure may be triggered by the UE in order to acquire radio resources from the network in order to transmit or receive data. In legacy, the scope of this procedure, beyond synchronizing with the gNB, may be understood to be to go in RRC_CONNECTED.

The UE may first transmit a random preamble, e.g., from a configured set of preambles, in the Physical Random Access Channel (PRACH) channel with the possibility of colliding with other UEs sending the same preamble. Then, the UE may receive Msg2 or Random Access Response (RAR), which may contain the Timing Advance command used to synchronize the time offset of the UE with the frame structure used by the gNB. It may also contain an UL grant to transmit the following message.

The following message transmitted by the UE may be Msg3, which may contain the first RRC message with which the UE may request a state transition to the gNB. In this context this message may be RRCResumeRequest. This message may also contain a UE identifier, used by the gNB to retrieve the UE context and act appropriately since the UE may have already some configurations to be considered. In the context of EDT / SDT, this message may also contain user data.

Finally, in Msg4, the gNB may send a Contention Resolution Identifier (ID), which may consist in a copy of the previous transmission used by the UE to determine if a possible collision may have been resolved. It may be understood that colliding UEs may send different Msg3s, so only one UE may have a matching Contention Resolution ID. Msg4 may also contain the last RRC message which may determine the state transition. Typically, in legacy, this message may be the RRCResume so that the UE may move to RRC_CONNECTED and start the data transfer. However, in the context of EDT or SDT Msg4 may also contain RRCRelease, which may terminate the transition if user data has been transmitted in Msg3.

Buffer Status Report (BSR)

The general scope of BSR may be understood to be to inform the gNB of the status of the Logical Channel buffers, specifically of the amount of data that may be currently pending for UL transmission. With this information, the gNB may provide new UL grants to satisfy the user demands without the UE performing a scheduling request for each transmission. Several formats are specified depending on the amount of data that may be pending and how many logical channels may be active. BSR may be as specified in Medium Access Control (MAC) specification 3GPP TS 38.321, v. 16.0.0.

In spite of its benefits, existing methods to perform Small Data transmissions may, under some circumstances provide worse performance than legacy procedures, resulting in unnecessary signalling, inefficient usage of resources, or requiring to initiate a new Random Access procedure from start.

3GPP draft document SAMSUNG: "Overall procedure for data transfer in inactive state", R2-168051, vol. RAN WG2, no. Reno, USA; 4 November 2016 discloses a procedure for data transfer in inactive state.

NPL document QUALCOMM INCORPORATED: "RACH based NR small data transmission", 3GPP DRAFT; R2-2007540, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Online; 7 August 2020 describes how a UE may be configured with a DRB-specific threshold for the amount of data that may require transition from the INACTIVE state to RRC_CONNECTED.

## SUMMARY

As part of the development of embodiments herein, one or more challenges with the existing technology will first be identified and discussed.

Although few details have been shared, a complete solution has not been formulated yet on how to perform subsequent transmissions in RRC_CONNECTED or RRC_INACTIVE beyond the one delivered by Msg3. While existing proposals exist on using a data volume threshold to determine which procedure the UE should perform, in Rel-15 EDT, the new procedure is limited to one transmission in Msg3.

An uncontrolled usage of transmissions in RRC_INACTIVE may degrade the overall performance, both from a network and UE point of view.

It is an object of embodiments herein to improve the handling of handling uplink transmission to a network node.

According to a first aspect of embodiments herein, the object is achieved by a method, performed by a wireless device. The method is for handling uplink transmission to a network node. The wireless device operates in a wireless communications network. The wireless device determines, while the wireless device is in inactive state, whether or not a size of a buffer of data for uplink transmission obtained in inactive state is smaller than a threshold. The wireless device also sends, to the network node, at least a first transmission comprising a first subset of the obtained data, and an explicit or implicit indication of a number of remaining transmissions of a plurality of transmissions that are needed to send the remaining obtained data. The sending of the at least first transmission is based on a result of the determining and is performed in inactive state. The wireless device also sends, to the network node, the remaining transmissions in the plurality of transmissions. The sending of the remaining transmissions is in inactive state or in connected state based on one or more further indications. The one or more further indications are one of: received from the network node and configured at the wireless device.

According to a second aspect of embodiments herein, the object is achieved by a method, performed by the network node. The method is for handling uplink transmission from the wireless device. The network node operates in the wireless communications network. The network node receives, from the wireless device, at least the first transmission comprising the first subset of data obtained by the wireless device in inactive state, and the explicit or implicit indication of the number of remaining transmissions of the plurality of transmissions that are needed to send the remaining data. The receiving of the at least first transmission is performed in inactive state. The network node also receives, from the wireless device, the remaining transmissions in the plurality of transmissions. The receiving of the remaining transmissions is in inactive state or in connected state based on the one or more further indications. The one or more further indications are one of: sent by the network node and configured at the wireless device.

According to a third aspect of embodiments herein, the object is achieved by the wireless device, for handling uplink transmission to the network node. The wireless device is configured to operate in the wireless communications network. The wireless device is further configured to determine while the wireless device is configured to be in inactive state, whether or not the size of the buffer of data for uplink transmission configured to be obtained in inactive state is smaller than the threshold. The wireless device is further configured to send, to the network node, at least the first transmission configured to comprise the first subset of the obtained data, and the explicit or implicit indication of the number of remaining transmissions of the plurality of transmissions that are configured to be needed to send the remaining obtained data. The sending of the at least first transmission is configured to be based on the result of the determining and is configured to be performed in inactive state. The wireless device is further configured to send, to the network node, the remaining transmissions in the plurality of transmissions. The sending of the remaining transmissions is configured to be in inactive state or in connected state based on the one or more further indications. The one or more further indications are configured to be one of: received from the network node and configured at the wireless device.

According to a fourth aspect of embodiments herein, the object is achieved by the network node, for handling uplink transmission from the wireless device. The network node is configured to operate in the wireless communications network. The network node is further configured to receive, from the wireless device, at least the first transmission configured to comprise the first subset of data configured to be obtained by the wireless device in inactive state, and the explicit or implicit indication of the number of remaining transmissions of the plurality of transmissions that are configured to be needed to send the remaining data. The receiving of the at least first transmission is configured to be performed in inactive state. The network node is also configured to receive, from the wireless device, the remaining transmissions in the plurality of transmissions. The receiving of the remaining transmissions being configured to be in inactive state or in connected state based on the one or more further indications. The one or more further indications are configured to be one of: sent by the network node and configured at the wireless device.

By determining whether or not the size of the buffer of data for uplink transmission obtained in inactive state is smaller than the threshold, the wireless device may be enabled to determine whether the wireless device 130 may or may not proceed with the plurality of transmissions after transmitting the first transmission.

By sending the first transmission comprising the first subset of the obtained data comprising the explicit or implicit indication of the number of remaining transmissions of the plurality of transmissions that are needed to send the remaining obtained data, the wireless device may enable the network node to know how much data the wireless device may have to transmit, and evaluate accordingly if this data may be performed in whole or in part in inactive state, and/or in connected state. That is, the first transmission may enable the network node to e.g., send back one or more grants accordingly.

By sending the remaining transmissions in the plurality of transmissions in inactive state or in connected state based on the one or more further indications, the wireless device may ensure that data transmission in inactive state may be performed under control of the network node, so that the transmission of further data in inactive state, e.g., RRC_INACTIVE, may be limited, e.g., to specific cases where the overhead due to the transition to connected state, e.g., RRC_CONNECTED, may have more impact than the reduced efficiency of transmitting in inactive state. The wireless device may therefore enable to guarantee a correct usage of the feature of transmission of data in inactive state, in the cases where it may improve the performance. Even though embodiments have been summarized above, the claimed embodiments are defined by the accompanying claims.


**BRIEF DESCRIPTION OF THE DRAWINGS**

Examples of embodiments herein are described in more detail with reference to the accompanying drawings, according to the following description.

Figure 1    is a schematic diagram depicting UE state machine and state transitions in NR.
Figure 2    is a schematic diagram depicting an example of a wireless communications network, according to embodiments herein.
Figure 3    is a flowchart depicting a method in a wireless device, according to embodiments herein.
Figure 4    is a flowchart depicting a method in a network node, according to embodiments herein.
Figure 5    is a schematic diagram illustrating a non-limiting example of Short Data Transmission (SDT) with subsequent data, according to some examples.
Figure 6    is a schematic diagram illustrating another non-limiting example of a Short Data Transmission (SDT) with subsequent data, according to examples of embodiments herein.
Figure 7    is a schematic block diagram illustrating two embodiments, in panel a) and panel b), of a wireless device, according to embodiments herein.

Figure 8    is a schematic block diagram illustrating two embodiments, in panel a) and panel b), of a network node, according to embodiments herein.

Figure 9    is a schematic block diagram illustrating a telecommunication network connected via an intermediate network to a host computer, according to embodiments herein.

Figure 10    is a generalized block diagram of a host computer communicating via a base station with a user equipment over a partially wireless connection, according to embodiments herein.

Figure 11    is a flowchart depicting embodiments of a method in a communications system including a host computer, a base station and a user equipment, according to embodiments herein.

Figure 12    is a flowchart depicting embodiments of a method in a communications system including a host computer, a base station and a user equipment, according to embodiments herein.

Figure 13    is a flowchart depicting embodiments of a method in a communications system including a host computer, a base station and a user equipment, according to embodiments herein.

Figure 14    is a flowchart depicting embodiments of a method in a communications system including a host computer, a base station and a user equipment, according to embodiments herein.

## DETAILED DESCRIPTION

Certain aspects of the present disclosure and their embodiments may provide solutions to the challenges discussed in the Summary section or other challenges. Embodiments herein may be generally understood to relate to different aspects of providing a Small Data Transmission with Subsequent Data in INACTIVE state. Embodiments herein may be understood to provide details on how subsequent transmissions in INACTIVE state may be triggered, and which signaling may be introduced to support this functionality in the context of Small Data Enhancement for NR. Embodiments herein may relate to how a data volume threshold, and/or other criteria may be used when the UE may potentially be going to perform multiple uplink data transmissions.

Some of the embodiments contemplated will now be described more fully hereinafter with reference to the accompanying drawings, in which examples are shown. In this section, the embodiments herein will be illustrated in more detail by a number of exemplary embodiments. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art. It should be noted that the exemplary embodiments herein are not mutually exclusive. Components from one embodiment may be tacitly assumed to be present in another embodiment and it will be obvious to a person skilled in the art how those components may be used in the other exemplary embodiments.

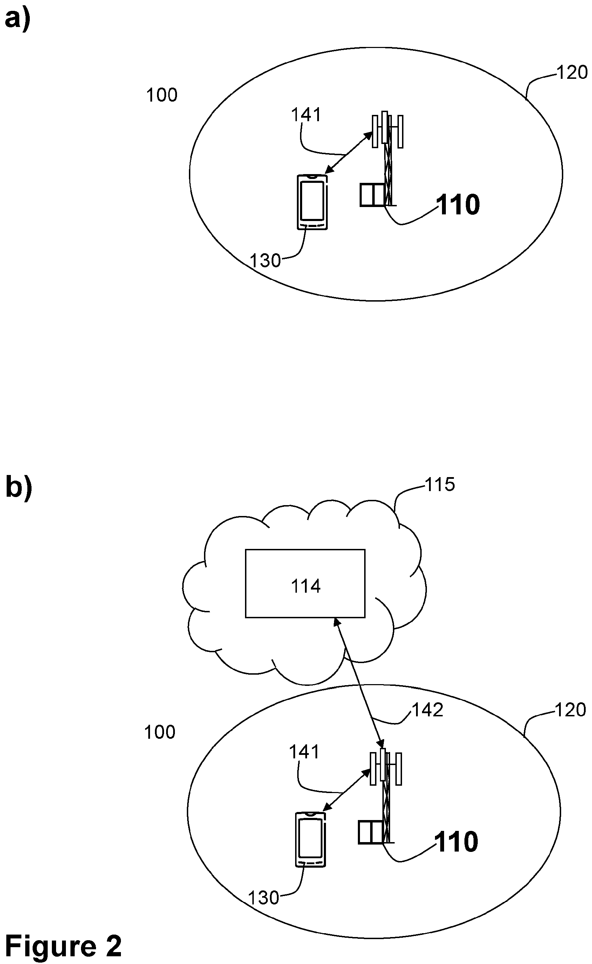

**Figure 2** depicts two non-limiting examples, in panel a) and panel b), respectively, of a wireless network or **wireless communications network 100**, sometimes also referred to as a wireless communications system, cellular radio system, or cellular network, in which embodiments herein may be implemented. The wireless communications network 100 may typically be support MTC, eMTC, IoT and/or NB-IoT. The wireless communications network 100 may be a 5G system, 5G network, or Next Gen System or network. In other examples, the wireless communications network 100 may instead, or in addition, support other technologies such as, for example, Long-Term Evolution (LTE), e.g. LTE-M, LTE Frequency Division Duplex (FDD), LTE Time Division Duplex (TDD), LTE Half-Duplex Frequency Division Duplex (HD-FDD), LTE operating in an unlicensed band, such as LTE Licensed-Assisted Access (LAA), eLAA, feLAA and/or MulteFire. Yet in other examples, the wireless communications network 100 may support other technologies such as, for example Wideband Code Division Multiple Access (WCDMA), Universal Terrestrial Radio Access (UTRA) TDD, Global System for Mobile communications (GSM) network, GSM/Enhanced Data Rates for GSM Evolution (EDGE) Radio Access Network (GERAN) network, Ultra-Mobile Broadband (UMB), EDGE network, network comprising any combination of Radio Access Technologies (RATs) such as e.g., Multi-Standard Radio (MSR) base stations, multi-RAT base stations etc., any 3rd Generation Partnership Project (3GPP) cellular network, WiFi networks, Worldwide Interoperability for Microwave Access (WiMax), or any cellular network or system. Thus, although terminology from 5G/NR and LTE may be used in this disclosure to exemplify embodiments herein, this should not be seen as limiting the scope of the embodiments herein to only the aforementioned system.

The wireless communications network 100 may comprise a plurality of network nodes, whereof a **network node 110** is depicted in the non-limiting example of Figure 2. The network node 110 is a radio network node. That is, a transmission point such as a radio base station, for example a gNB, an eNB, an eNodeB, or a Home Node B, a Home eNode B, or any other network node with similar features capable of serving a user equipment, such as a wireless device or a machine type communication device, in the wireless communications network 100. In some examples, such as that depicted in Figure 2 b, the network node 110 may be a distributed node, and may partially perform its functions in collaboration with a **virtual node 114** in a **cloud 115.**

The wireless communications network 100 may cover a geographical area, which in some embodiments may be divided into cell areas, wherein each cell area may be served by a radio network node, although, one radio network node may serve one or several cells. In the example of Figure 2, the network node 110 serves a **cell 120**. The network node 110 may be of different classes, such as, e.g., macro eNodeB, home eNodeB or pico base station, based on transmission power and thereby also cell size. In some examples, the network node 110 may serve receiving nodes with serving beams. The radio network node may support one or several communication technologies, and its name may depend on the technology and terminology used. Any of the radio network nodes that may be comprised in the communications network 100 may be directly connected to one or more core networks.

A plurality of wireless devices may be located in the wireless communication network 100, whereof a **wireless device 130**, is depicted in the non-limiting example of Figure 2. The wireless device 130 comprised in the wireless communications network 100 may be a wireless communication device such as a 5G UE, or a UE, which may also be known as e.g., mobile terminal, wireless terminal and/or mobile station, a mobile telephone, cellular telephone, or laptop with wireless capability, just to mention some further examples. Any of the wireless devices comprised in the wireless communications network 100 may be, for example, portable, pocket-storable, hand-held, computer-comprised, or a vehicle-mounted mobile device, enabled to communicate voice and/or data, via the RAN, with another entity, such as a server, a laptop, a Personal Digital Assistant (PDA), or a tablet, Machine-to-Machine (M2M) device, a sensor, IoT device, NB-IoT device, device equipped with a wireless interface, such as a printer or a file storage device, modem, or any other radio network unit capable of communicating over a radio link in a communications system. The wireless device 130 comprised in the wireless communications network 100 may be enabled to communicate wirelessly in the wireless communications network 100. The communication may be performed e.g., via a RAN, and possibly the one or more core networks, which may be comprised within the wireless communications network 100.

The wireless device 130 may be configured to communicate within the wireless communications network 100 with the network node 110 over a **first link 141**, e.g., a radio link. The network node 110 may be configured to communicate within the wireless communications network 100 with the virtual network node 114 over a **second link 142**, e.g., a radio link or a wired link.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

In general, the usage of "first" and/or "second" herein may be understood to be an arbitrary way to denote different elements or entities, and may be understood to not confer a cumulative or chronological character to the nouns they modify, unless otherwise noted, based on context.

Several embodiments are comprised herein. It should be noted that the examples herein are not mutually exclusive. Components from one embodiment may be tacitly assumed to be present in another embodiment and it will be obvious to a person skilled in the art how those components may be used in the other exemplary embodiments.

More specifically, the following are embodiments related to a wireless device, such as the wireless device 130, e.g., a 5G UE or a UE, and embodiments related to a network node, such as the network node 110, e.g., a gNB or an eNB.

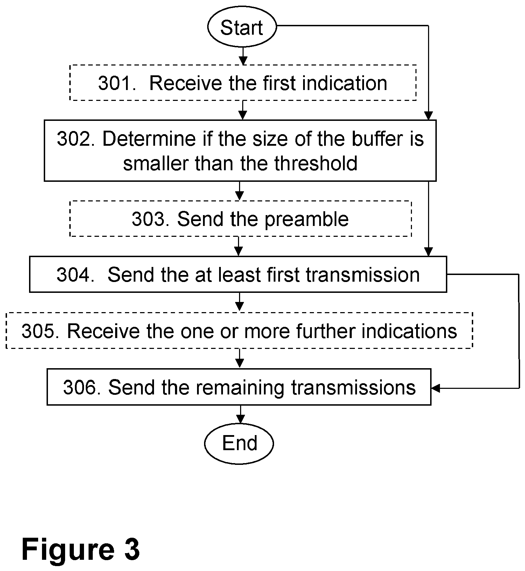

Embodiments of a method, performed by the wireless device 130, will now be described with reference to the flowchart depicted in Figure 3. The method may be understood to be for handling uplink transmission to the network node 110. The wireless device 130 operates in the wireless communications network 100.

In some embodiments, the wireless communications network 100 may support at least one of: New Radio (NR), Long Term Evolution (LTE), LTE for Machines (LTE-M), enhanced Machine Type Communication (eMTC), and Narrow Band Internet of Things (NB-IoT).

The method may be understood to be a computer-implemented method.

The method may comprise some of the following actions. In some embodiments, all the actions may be performed. One or more embodiments may be combined, where applicable. Components from one embodiment may be tacitly assumed to be present in another embodiment and it will be obvious to a person skilled in the art how those components may be used in the other exemplary embodiments. All possible combinations are not described to simplify the description. A non-limiting example of the method performed by the wireless device 130 is depicted in Figure 3. In Figure 3, optional actions in some embodiments may be represented with dashed lines.

**Action 301**

In the course of operations in the wireless communications network 100, the wireless device 130 may obtain data for uplink transmission while being in inactive state. Embodiments herein may be understood to provide details on how, after a first transmission comprising a first subset of the obtained data, subsequent transmissions in inactive state may be triggered, and which signaling may be introduced to support this functionality, e.g., in the context of Small Data Enhancement for NR. After the first transmission comprising the first subset of the obtained data may be performed, a plurality of transmissions may be needed to send remaining obtained data of the data having been obtained in inactive state. The inactive state may be, e.g., as defined in 5G or in a younger system having equivalent functionality. In some examples, the data may be "Small Data". Each transmission in inactive state may be, e.g., an SD Transmission (SDT).

In this Action 301, the wireless device 130 may receive a first indication from the network node 110. The indication may comprise a configuration that may enable the wireless device 130 to perform embodiments herein. The first indication may indicate at least one of: i) a threshold, ii) a maximum number (N) of transmissions allowed in the plurality of transmissions, that is, the transmissions that may be needed to send the remaining obtained data, and iii) whether or not transmission of more than one transmission of data in inactive state, e.g., RRC_INACTIVE state, may be allowed.

The threshold may be of a size of a buffer of data for uplink transmission, the data having been obtained in inactive state. In some examples, the threshold may be a Data Volume Threshold (DVT).

In one example, it may not be the DVT that may be configured and signaled by the network node 110 e.g., according to this Action 301 and Action 401, but rather the maximum number N of allowed subsequent SDTs in the cell. That is, the network, e.g., the network node 110, may not desire to have more than e.g., 3 SDT, that is, 3 uplink transmissions during the SDT procedure, allowed in the cell 120, this as a balance between signaling overhead reduction and efficiency, both spectral efficiency and allowing several data transmission before contention may have been resolved.

In a baseline example, the wireless device 130 may need to be configured with a DVT, as an example of the threshold, or a maximal number N of SDTs, that is, of uplink transmissions during the SDT procedure, allowed in the cell, as an example of the maximum number. Also, the wireless device 130 may need to know if the feature may be enabled in the current cell 120, and if the wireless device 130 may be allowed to use the feature, as an example of whether or not transmission of more than one transmission of data in inactive state may be allowed.

The wireless device 130 may be considered a generic UE which may be, in some cases, in inactive state, e.g., RRC_INACTIVE state, and may have to transmit $P_L$ bits of data. The wireless device 130 may be in channel conditions such that it may be able to perform UL data transmission in inactive state, e.g., RRC_INACTIVE state, with Modulation Coding Scheme (MCS) index $MCS_{INACTIVE}$ and, once in connected mode, e.g., RRC_CONNECTED, it may perform UL data transmission with MCS index $MCS_{CONNECTED}$, so that $MCS_{INACTIVE} \leq MCS_{CONNECTED}$.

Assuming the wireless device 130 may have the capability to transmit using a certain maximum bandwidth both in inactive state, e.g., RRC_INACTIVE, and connected mode, e.g., RRC_CONNECTED, the aforementioned MCS indexes may result in two maximum Transport Block Sizes (TBSs), $TBS_{INACTIVE}$ and $TBS_{CONNECTED}$, respectively, with $TBS_{INACTIVE} \leq TBS_{CONNECTED}$.

In one alternative, the TBSs and/or MCSs, or the set of possible TBSs and/or MCSs for SDT may be provided in the configuration.

The receiving in this Action 301 may be performed, e.g., via the first link 141.

Depending on the link quality, different UEs may then fit different amount of data in N SDT. This may be calculated from a configured $TBS_{INACTIVE}$ to be used for the SDT, e.g., UE specifically configured and stored in UE context. Number N and information on the transmission sizes, e.g., $TBS_{INACTIVE}$ together with the data size may later be used to determine whether SDT is triggered, e.g., in Action 302.

The configuration that may enable embodiments herein may be broadcasted by the network node 110 in System Information (SI), e.g., according to this Action 301 and Action 401 described later, or may happen at a previous stage before the wireless device 130 may be allowed to use the feature using the legacy RRC framework.

In one example, the aforementioned configurations may be broadcasted, e.g., according to this Action 301 and Action 401, through SI, so that all UEs may have the same configuration. In another example, the SDT configuration may be provided to the wireless device 130 via dedicated RRC signaling during an initial connection. Rel-17 SDT is only being specified in RRC_INACTIVE state, which may be understood to rely on that an earlier RRC connection has been suspended.

In one further example, when the wireless device 130 may perform the first connection, it may also be configured by the network node 110, e.g., according to Action 301, before it may start camping in RRC_INACTIVE. The SDT configuration may be tailored to the specific wireless device 130 based on its capabilities and the expected kind of traffic. For instance, an operator may decide to disable this feature for smartphones and enable it only for MTC devices. In the same way, an operator may decide to allow only one transmission in Msg3 for devices generating frequent traffic, and allow more transmissions for devices generating infrequent traffic, in both case by setting an appropriate threshold, e.g., DVT. This UE-specific configuration may also include parameters for the scheduling scheme configuration according to embodiments herein.

In some embodiments, the threshold may be selected based on a condition of a radio link between the wireless device 130 and the network node 110, that is, the first link 141, to be used for the transmission of the obtained data.

This may be, e.g., specified in the first indication received from the network node 110. The condition of the radio link may be based on a measured RSRP. In one example, the measured cell RSRP or RSRQ, or another quality metric, may be used to select the threshold, e.g., the DVT. For example, if the measured RSRP of the wireless device 130 is below threshold_1, it may have DVT_1, and otherwise DVT_2, where DVT_1<DVT_2. It may also be specified that DVT_2 may only be selected if the data available for SDT is larger than DVT_1. The DVTs may also correspond to different Logical CHannels (LCHs) or priorities or Quality of Service (QoS), so that if e.g., the wireless device 130 has data of a specific QoS class, it may use a specific DVT.

By receiving the first indication from the network node 110 in this Action 301, the wireless device 130 may be enabled to determine whether the wireless device 130 may or may not proceed with the plurality of transmissions after transmitting the first transmission, and if so, how many transmissions may be comprised in the plurality of transmissions, that is, how much data may be transmitted by the wireless device 130 in the uplink in inactive state.

**Action 302**

In this Action 302, the wireless device 130 determines, while the wireless device 130 is in inactive state, whether or not a size of a buffer of data for uplink transmission obtained in inactive state is smaller than the threshold, e.g., the threshold indicated by the network node 110 in the first indication. The data may have been obtained, by the wireless device 130, in inactive state. Determining in this Action 302 may comprise deciding or calculating. After the wireless device 130 may have been configured, and while it may be camping in RRC_INACTIVE, new data may arrive, and its amount may be compared, e.g., according to Action 302, to the threshold, e.g., a configured Data Volume Threshold (DVT).

In a further example, the decision on whether to perform the legacy or the discussed procedure according to embodiments herein may be based not only on the threshold, e.g., the configured DVT, but also on the measured cell RSRP or Reference Signal Received Quality (RSRQ). Similarly to the baseline example, this decision may be taken by the wireless device 130 as well, e.g., according to Action 302. As stated above, in one example, the measured cell RSRP or RSRQ, or another quality metric, may be used to select the threshold, e.g., the DVT. For example, if the measured RSRP of the wireless device 130 is below threshold_1, it may have DVT_1, and otherwise DVT_2, where DVT_1<DVT_2.

By determining whether or not the size of the buffer of data for uplink transmission obtained in inactive state is smaller than the threshold in this Action 302, the wireless device 130 may be enabled to determine whether the wireless device 130 may or may not proceed with the plurality of transmissions after transmitting the first transmission.

**Action 303**

In this Action 303, the wireless device 130 may send a preamble to the network node 110. The preamble may indicate a result of the determination performed in Action 302.

The sending in this Action 303 may comprise e.g., transmitting e.g., via the first link 141.

The preamble may be a special SDT preamble which may indicate to the network node 110 that a larger TB may be required for Msg3 transmission.

In some examples, this Action 303 may comprise the wireless device 130 determining which preamble to use, of a plurality of preambles. Each of the preambles in the plurality may e.g., indicate different outcomes of the determination performed in Action 302.

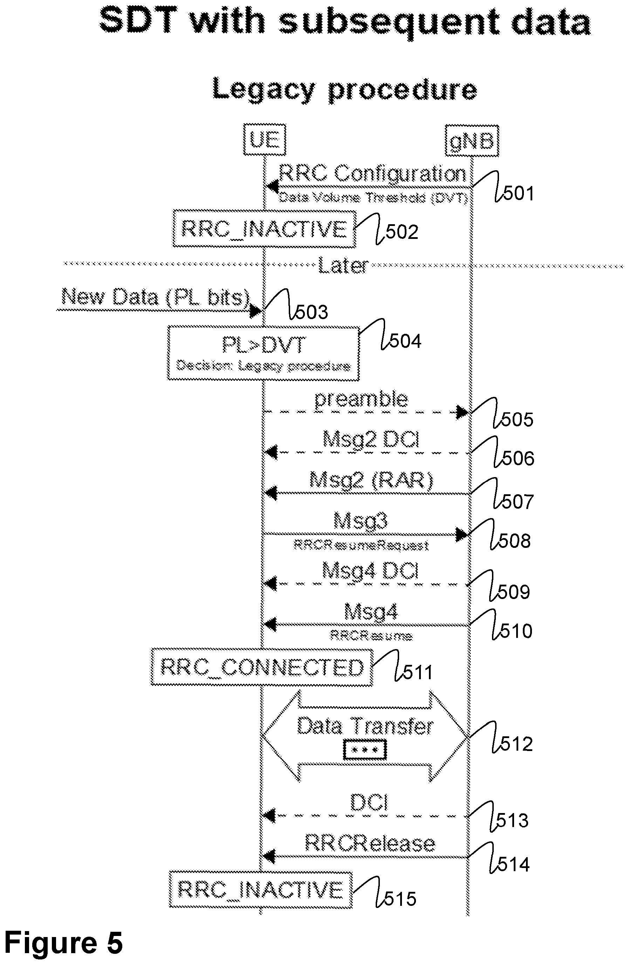

As stated earlier, the wireless device 130 may have to transmit $P_L$ bits of data. If $P_L$ is greater than the threshold, the wireless device 130 may perform the legacy RRC Resume procedure by sending a legacy preamble, waiting for Msg2, and then sending a Msg3 which may consist only in the RRCResumeRequest message. Since a legacy preamble may be used, the network node 110 may allocate a legacy-sized TB for Msg3 transmission. Then, once Msg4 with RRCResume may have been received, the wireless device 130 may perform the data transfer in RRC_CONNECTED, and then the connection may be released by the network node 110 once the transfer may have been completed. A BSR may be included to release the connection as soon as the transfer may be completed, or the release may be based on an inactivity timer. This case is shown later in Figure 5.

If $P_L$ is smaller than the threshold, e.g., as determined in Action 302, the wireless device 130 may try to send, e.g., according to Action 304 and/or Action 306, all the data in RRC_INACTIVE, irrespective of whether multiple SDT transmissions may be required. It may start by sending, e.g., according to Action 303, a special SDT preamble which may indicate to the network node 110 that a larger TB may be required for Msg3 transmission.

As stated above, in one example, the measured cell RSRP or RSRQ, or another quality metric, may be used to select the threshold, e.g., the DVT. The selected DVT may be indicated by the selected preamble and result in different grant sizes for msg3.

By sending the preamble in this Action 303, the wireless device 130 may be enabled to then receive one or multiple grants from the network node 110 in downlink information, e.g., in a Msg2 message.

In one further example, Msg2 may be extended to include multiple UL Grants for as many subsequent transmissions. In this case, since when Msg2 may be constructed, the network node 110 may not be able to know the amount of data to be transmitted, these grants may be unused by the wireless device 130 and the network node 110 may assume that the wireless device 130 may want to transmit DVT bits of data. As mentioned elsewhere in this document, the network node 100 may be aware of the amount of data that the wireless device 130 may usually transmit, so the amount of UL Grants in Msg2 may be based on this value rather than DVT.

In one further example, Msg2 may still contain only one UL Grant, but further UL Grants may be derived by a hardcoded schema or based on a configurable schema that the network node 110 may broadcast, e.g., according to Action 301 and Action 401, through SI, or configured previously in the specific wireless device 130. As an example, if the maximum number N of allowed subsequent SDTs in the cell 120 are configured, the grant in the RAR may be interpreted as N grants with time offsets relative to the grant in the RAR. In this case, the same TBS, MCS, Physical Resource Blocks (PRBs) etc may be used for the subsequent grants.

In one example, legacy Downlink Control Information (DCI) formats may be reused while in RRC_INACTIVE and transmitted in the Common Search Space (CSS) instead of being of new design.

**Action 304**

In this Action 304, the wireless device 130 sends, to the network node 110, at least a first transmission comprising a first subset of the obtained data. The at least first transmission also comprises an explicit or implicit indication. The explicit or implicit indication is of a number of remaining transmissions of the plurality of transmissions that are needed to send the remaining obtained data. The remaining obtained data may be understood as a second subset of the obtained data, which may not overlap with the data in the first subset. That is, it may be understood as the part of the obtained data that may not have been sent yet, e.g., in the first transmission.

The sending in this Action 304 of the at least first transmission is based on a result of the determining in Action 302 and is performed in inactive state.

The sending in this Action 304 may be, e.g., transmitting, and may be performed, e.g., via the first link 141.

The sending of at least the first transmission in this Action 304 may be performed, e.g., in an Msg3.

The indication may be e.g., a BSR, or a MAC CE. The indication, e.g., if implicit, may not comprise the number of the remaining transmissions, but the number of the remaining transmissions may be derivable from the indication. For example, the indication may comprise an amount of data remaining to be transmitted in the remaining transmissions. Other variants are possible. In some embodiments, the implicit indication of the number of remaining transmissions may comprise a report on the size of the buffer; in some of such embodiments, the remaining transmission of the plurality of transmissions may be performed in inactive state. The report on the size of the buffer may be a Buffer Status Report (BSR).

In legacy behavior, Msg3 may carry RRC messages and possibly some assistance information that a gNB may use to optimize the procedure. In a baseline example, the same behavior may be assumed, and the assistance information transmitted may be the Buffer Status Report (BSR).

The Msg3 may contain a legacy RRCResumeRequest message, the first segment of Data, that is, the first subset of the obtained data, and the BSR, or any other assistance data, which may inform the network node 110 on how much data there may be left, so that it may schedule the appropriate number of UL transmissions.

In one example, the threshold, e.g., the DVT, may be equivalent to the grant size that may be received for Msg3. It may then be specified that no BSR may be included if the data available for transmission may be fit in msg3. In case the data may not fit in Msg3 and the wireless device 130 may still want to use SDT, a BSR may be included in Msg3.

In an example of the above, the legacy preamble may be used, in Action 303, for Msg1 transmission in case multiple (>1) SDT may be required to transmit all the data in the buffer, $P_L$, of the wireless device 130. In this way, mainly the BSR may be transmitted, e.g., according to this Action 304, in Msg3, but this may allow the network node 110 to dimension, e.g., according to Action 404, Action 305 and/or Action 405, the UL grants for the subsequent SDTs to minimize the padding. To enable this, an SDT indication may be included in Msg3, e.g., according to this Action 304, to inform the network node 110 that the wireless device 130 should not, e.g., is not to, be moved to RRC_CONNECTED and that instead UL grants should, e.g., may have to, be provided to the wireless device 130 to transmit the data in its buffer according to the BSR, and nothing more, in RRC_INACTIVE state. It may be noted however, that it may still be up to network implementation to be able to move the wireless device 130 to RRC_CONNECTED in e.g., the case of pending DL data. Further, if SDT in only Msg3 is not supported, this example may be understood to have the advantage that no special preamble partition may need to be configured at all.

In one further example, during the configuration phase, the wireless device 130 may inform the network, e.g., the network node 110, about the typical payload size that may, e.g., will, be transmitted at each access. This may typically apply to MTC devices implementing a very repetitive task, such as sensors, where each transmission may contain different samples of the same variable, and thus may all be of the same size. In this case, the wireless device 130 may avoid including the BSR or it may possibly include a 1-bit indication or other similar assistance information in Msg3, e.g.,

according to Action 304, when the payload may correspond to the one expected. In this way, more space may be available in Msg3 for the user data. In the rare case where the payload size may be different than what may be expected, the wireless device 130 may include BSR, e.g., according to Action 304, as in the baseline behavior.

In an addition to the above, special consideration may be taken to if the wireless device 130 may be considered to be stationary, again, e.g., relevant for MTC and IoT devices. If so, the channel quality may be expected to be similar for subsequent SDT and also information on MSC, TBS etc. may be stored.

In an alternative example, BSR or a Release Assistance Indicator (RAI) may not be transmitted in Msg3, but a similar kind of third indication, e.g., assistance information, e.g. in the form of a new kind of MAC Control Element (CE), may be included in the Msg3, providing the network node 110 information, e.g., on the data volume in the uplink buffer in the wireless device 130 or the expectation of data to be transmitted by the wireless device 130, the number of transmissions that may be needed or expected to be needed, or the need or expectation for further uplink or downlink transmissions after the data available in the current buffer may have been transmitted.

In a further example, the new procedure may be applied to the 2-step RACH access. In this case, the first segment of data may be transmitted, e.g., according to this Action 304, in MsgA instead of Msg3.

By, in this Action 304, sending the first transmission comprising the first subset of the obtained data comprising the explicit or implicit indication of the number of remaining transmissions of the plurality of transmissions that are needed to send the remaining obtained data, the wireless device 130 may enable the network node 110 to know how much data the wireless device 130 may have to transmit, and evaluate accordingly if this data may be performed in whole or in part in inactive state. That is, the first transmission may enable the network node 110 to send back to the wireless device 130 one or more grants accordingly.

**Action 305**

In this Action 305, the wireless device 130 may receive the one or more further indications from the network node 110. The one or more further indications may indicate how to transmit the plurality of transmissions. The one or more further indications may be, for example, RRC signalling, DCIs, RRCResume. The one or more further indications may be received from the network node 110, e.g., broadcasted in the cell 120.

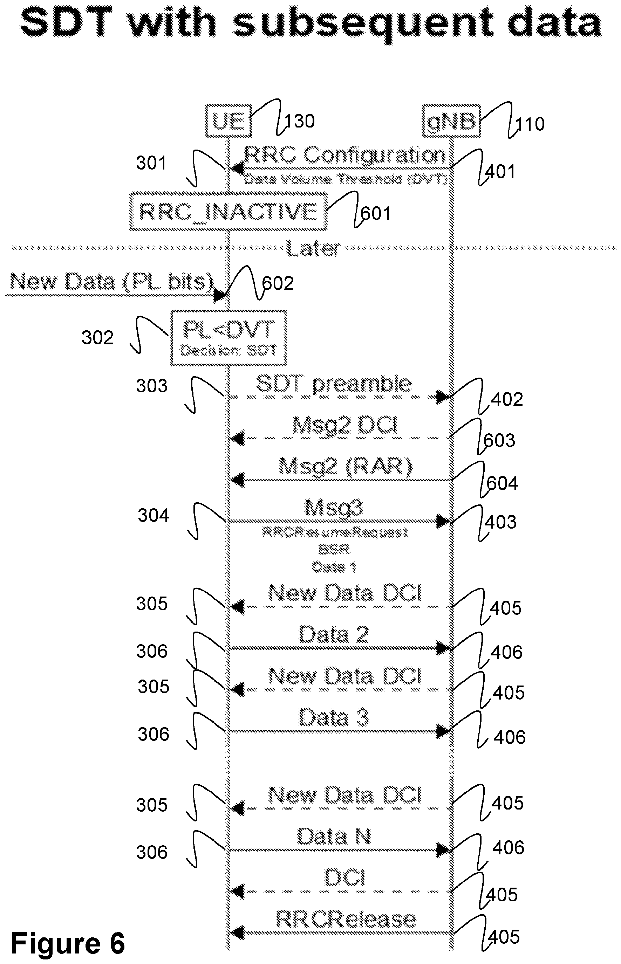

In some examples, the one or more further indications may comprise DCI. After the Msg3 may have been sent with or without data, the wireless device 130 may monitor the Physical Downlink Control Channel (PDCCH) for DCI. In legacy, this DCI may schedule Msg4 or a Msg3 retransmission. In the baseline example, according to embodiments herein, a design of a new DCI format may be provided, which may enable the scheduling of further PUSCH transmissions in inactive state, e.g., RRC_INACTIVE. This DCI may be referred to herein as "New Data DCI", as depicted in Figure 6, which will be described later. After each PUSCH transmission in RRC_INACTIVE, the wireless device 130 may again wait for a DCI, scheduled in Common Search Space (CSS), which may schedule Msg4, a retransmission of the previous message or one further PUSCH transmission.

In some particular embodiments, the one or more further indications may indicate at least one of: i) transport block sizes allowed to be used for the plurality of transmissions, wherein the first indication may be received in inactive state, and ii) modulation coding schemes allowed to be used for the plurality of transmissions, wherein the first indication may be received in inactive state. Other variants are also possible.

At any time the network node 110 may move the wireless device 130 to RRC_CONNECTED, based on internal evaluation, by sending, e.g., according to this Action 305, and Action 405, a RRCResume message. Also, the feature may be enabled or disabled in a certain cell or for certain UEs through dedicated configuration.

In another example, the wireless device 130 may perform only a certain number of transmissions in RRC_INACTIVE, and then, the network node 110 may move the wireless device 130 to RRC_CONNECTED by sending, e.g., according to this Action 305, and Action 405, a RRCResume message. In this way, the following transmissions may happen with a more efficient MCS, and thus all the data may be delivered in a smaller number of transmissions. The network node 110 may perform this decision, e.g., according to Action 404, based on the BSR received in Msg3 or based on the current channel conditions of the wireless device 130, e.g., $MCS_{INACTIVE}$, $MCS_{CONNECTED}$.

Accordingly, in some examples, the one or more further indications may be received from the network node 110 and may be based on the sent explicit or implicit indication.

In any of the above, when UL grants may have to be provided to the wireless device 130 for N SDTs, the network node 110 may have two alternatives, e.g., to consider according to Action 404. Either the UL grants may be provided sequentially, that is, one grant at a time may be provided to the wireless device 130 along with the Acknowledgement (ACK) of the previous transmission. Alternatively, an UL multi-grant may be provided to the wireless device 130 after the BSR, e.g., according to this Action 305 and Action 405, and may in one transmission provide several grants to the wireless device 130 for the transmission of a fraction or all its data in the UL buffer, $P_L$.

In a further example, in case the wireless device 130 may receive, e.g., according to Action 305, multiple UL grants for a total amount of data that may not match the signaled payload $P_L$, e.g., not enough grants may have been received or grants may have been received for more transmissions than what may be necessary, the wireless device 130 may interpret the event as failed contention. This may happen when the network node 110 may receive a BSR from a colliding UE which may have to transmit a different amount of data than the first UE, that is, than the wireless device 130.

The network node 110 may keep scheduling new UL transmissions until all the data may be transmitted. If the first transmission in Msg3 is sufficient, the network node 110 may simply release the connection in Msg4.

From the point of view of the network node 110, if the legacy preamble is used, the legacy Resume procedure may be performed. If the SDT preamble is used but BSR is not included, there may be only one transmission in Msg3 and then the connection may be released in Msg4. If the SDT preamble is used and BSR is included in Msg3, the network node 110 may continue scheduling UL transmissions until all the data may be delivered.

In a further example, the new procedure may be applied to the 2-step RACH access. In this case, the first segment of data may be transmitted, e.g., according to Action 304, in MsgA instead of Msg3, and then the wireless device 130 may receive, e.g., according to this Action 305, further instructions, e.g., DL RRC message or Downlink Control Indicator (DCI), in MsgB. Other than the dedicated "2-step RACH SDT preambles", the network node 110 may have to reserve enough PUSCH resource to accommodate the larger data segment.

By receiving the one or more further indications, the wireless device 130 may enable the network node 110 to control data transmission in inactive state, so that the transmission of further data in RRC_INACTIVE may be limited, e.g., only to the cases where energy consumption, latency or overall channel occupation may be minimized or kept under control. In fact, the transmission of data in RRC_INACTIVE may be less efficient than when it may be transmitted in RRC_CONNECTED, so this mechanism may be intended for specific corner cases where the overhead due to the transition to RRC_CONNECTED may have more impact than the reduced efficiency of transmitting in RRC_INACTIVE. The wireless device 130 may therefore enable to guarantee a correct usage of the feature of transmission of data in inactive state, in the cases where it may improve the performance.

**Action 306**

In this Action 306, the wireless device 130 sends, to the network node 110, the remaining transmissions in the plurality of transmissions. The sending in this Action 306 of the remaining transmissions is in inactive state or in connected state based on the one or more further indications. The one or more further indications are one of: received from the network node 110, and configured at the wireless device 130. That is, in some embodiments, the transmission of the remaining transmissions may be based on the received one or more further indications in Action 305. The one or more further indications may be, for example, RRC signalling, DCIs, RRCResume, if e.g., received from the network node 110, or a configured rule.

In some embodiments, the sending in this Action 306 may be further based on one or more criteria. The one or more criteria may be selected from: i) a condition of the radio link between the wireless device 130 and the network node 110 to be used for the transmission of the obtained data, ii) a size of a user payload in the obtained data, iii) a second indication of load of a cell 120 wherein the wireless device 130 is to send the obtained data, and iv) another indication received from the network node 110. Other variants are also possible.

With regards to the condition of the radio link, in one example, whenever the stored $TBS_{INACTIVE}$ or $MSC_{INACTIVE}$, etc. may have to be utilized for SDT, e.g., according to this Action 306, for stationary UEs, a check in the wireless device 130 may be required to ensure that the wireless device 130 has not moved. This may, e.g., be based on a RSRP/RSRQ measurement and the difference to previously stored values.

With regards to the size of the user payload, in each TB, not only user data may be present. As mentioned above, Msg3 may comprise an RRC message, BSR and various Medium Access Control (MAC) subheaders. If data is included, some further space may be used for the MAC subheader and upper layers' headers. Similarly, also in the subsequent RRC_INACTIVE and RRC_CONNECTED transmissions, part of the TB may be used to deliver MAC and upper layer headers. To keep the discussion simple, it may be assumed that $S_{Msg3}$, $S_{INACTIVE}$ and $S_{CONNECTED}$ represent the amount of user data that may be included in Msg3, RRC_INACTIVE PUSCH and RRC_CONNECTED PUSCH, respectively.

From the RRC point of view, the wireless device 130 may perform an RRC Resume procedure, although the content of the messages at the lower layer may be different.

In a further example, the wireless device 130 may decide to use the SDT procedure, e.g., according to Action 304 and/or Action 306, even when the user payload may exceed the DVT. By doing so, the wireless device 130 may start the data transfer in Msg3, e.g., according to Action 304, which, in some cases, may be completed earlier than using the legacy procedure. In this case, the network node 110 may move the wireless device 130 in RRC_CONNECTED in Msg4 as in the legacy procedure, the only difference may be that part of the data may be sent in Msg3, e.g., according to this Action 304. Specifically, this behavior may be convenient when $S_{CONNECTED}$ may fulfill the following condition:

$$k \cdot S_{CONNECTED} < P_L < k \cdot S_{CONNECTED} + S_{Msg3}, \quad \forall\, k \in \mathbb{N}$$

A simple example is provided below:

Assumptions: $S_{Msg3}$ = 800 bit, $S_{CONNECTED}$ = 4000 bit, $P_L$ = 8500 bit, DVT = 800 bit.

In this case, $P_L$ > DVT, as may be determined according to Action 302, so the legacy procedure may have to be used, but in this case, the aforementioned condition may apply, and so the example may be used ($2 \cdot S_{CONNECTED}$ < $P_L$ < $2 \cdot S_{CONNECTED}$ + $S_{Msg3}$)

If the baseline example is used, the sequence of signals/messages may be as follows: Legacy Preamble -> Msg2 -> Msg3(RRCResumeRequest) -> RRCResume -> Data1 (4000 bit) -> Data2(4000 bit) -> Data3(500 bit) ->RRCRelease → Total: 8 messages

If the new example is used, the sequence of signals/messages may be as follows:

SDT Preamble sent in Action 303 -> Msg2 -> Msg3(RRCResumeRequest + BSR + Data1 (800 bit)) sent in Action 304 -> RRCResume -> Data2(4000 bit) -> Data3(3700 bit) -> RRCRelease → Total: 7 messages

With respect to the second indication of the load, in an alternative example of the above, based on the case with 'maximum number N of allowed subsequent SDTs', whether SDT may be allowed for the wireless device 130 may be not only based on a DVT but also on the cell load, or expected/estimated collision probability. That is, the multiple SDT solution may even be more beneficial than the "single SDT" in the above calculation, since RRCResume and RRCRelease may not have to be transmitted, e.g., a total of 5 messages if Hybrid automatic repeat request (HARQ) Acknowledgement (ACK)/Negative Acknowledgement (NACK) is not considered. However, if the wireless device 130 is not in RRC Connected, there may be a larger risk of collision on the SDTs since the wireless device 130 may be understood to not have a dedicated connection and contention may not have been resolved. Therefore, also the load or collision probability may be considered as a parameter in determining if SDT may be suitable and/or allowed for the wireless device 130. This may be either signaled to the wireless device 130, estimated by the wireless device 130 from e.g., the number of failed accesses, or estimated by the network node 110 to adjust the N or DVT value communicated to UEs. The wireless device 130, it if estimates to the load or collision probability, may then send the second indication to the network node 110.

With regards to the another indication received from the network node 110, at any time the gNB may move the UE to RRC_CONNECTED, based on internal evaluation, by sending, e.g., according to Action 405, a RRCResume message. Also, the feature may be enabled or disabled in a certain cell or for certain UEs through dedicated configuration.

Also with regards to the another indication received from the network node 110, at the end of the transfer, the connection may be released through the RRCRelease message.

In an alternative example of the above, an RRC Release message with release cause 'suspend' may not be sent in full to reduce signaling overhead, but instead a compressed version may be transmitted to the wireless device 130, e.g., according to this Action 305 and Action 405. That is, upon a previous connection, it may be defined which information elements (IEs) in the RRC Release message may be static in case a compressed version may be later used. Then, upon a first suspension, the full RRC Release message may be provided to the wireless device 130 and stored in the wireless device 130. But then, in all subsequent cases, the compressed version of the RRC Release message may be used, only explicitly included the few selected updated IEs, e.g., non-static IEs earlier defined. In one example, all IEs in the RRC Release message may be static except the IE 'NextHopChainingCount' which may be required to be updated for security.

In some embodiments, at least one of the following three options may apply. In a first option, the implicit indication of the number of remaining transmissions may comprise the report on the size of the buffer, e.g., a BSR; in some of such embodiments, the remaining transmission of the plurality of transmissions may be performed in inactive state. In a second option, a last transmission in time of the plurality of transmissions may comprise a third indication; in some of such embodiments, the third indication may indicate that a connection with the network node 110 may need to be released. For example, in an alternative example of the above, instead of transmitting a BSR of several bytes, a shorter, e.g., 1 bit, "Release Assistance Indicator" may be provided in the last SDT from the wireless device 130. That is, whenever SDT transmission may be initiated, e.g. by SDT indication in Msg3, e.g., according to Action 304, or by the sending of a SDT preamble for Msg1, e.g., according to Action 303, the network node 110 may continue to provide, e.g., according to Action 305 and Action 405, subsequent UL grants to the wireless device 130, e.g., based on the max TBS expected to be supported for the wireless device 130 based on the suspended RRC UE context, until this third indication, e.g., a Release Assistance Indicator (RAI) indication, may be included in the final SDT. For example, the RAI indication may inform the network node 110 that this is the final transmission and after the UL buffer of the wireless device 130 may have been emptied.

In a third option, each of the remaining transmissions that may be sent in inactive state may be triggered by a respective further indication, of the one or more further indications, received from the network node 110, e.g., while the wireless device 130 may be in inactive state. The respective further indication may be a downlink control information (DCI) message. Other variants may also be possible.

Every transmission in the plurality of transmissions may comprise a respective identifier.

In a further example, the wireless device 130 may include in each RRC_INACTIVE transmission an identifier, e.g., the UE ID that may have been sent also in Msg3. In fact, in case of collision it may happen that the network node 110 may receive segments of data from multiple UEs, one for each RRC_INACTIVE transmission, depending on the current channel conditions. The network node 110 may then understand that a collision happened if the received transmissions do not have the same ID, consider, e.g., according to Action 404, the transmission failed and possibly notify the UEs by rejecting the connection.

In a further example, the new procedure may be applied to the 2-step RACH access. In this case, as stated earlier, the first segment of data may be transmitted, e.g., according to Action 304, in MsgA instead of Msg3, and then the wireless device 130 may receive, e.g., according to Action 305, further instructions, e.g., DL RRC message or Downlink Control Indicator (DCI), in MsgB. Other than the dedicated "2-step RACH SDT preambles", the network node 110 may have to reserve enough PUSCH resource to accommodate the larger data segment.

By sending the remaining transmissions in the plurality of transmissions in inactive state or in connected state based on the one or more further indications in this Action 306, the wireless device 130 may ensure that data transmission in inactive state may be performed under control of the network node 110, so that the transmission of further data in RRC_INACTIVE may be limited, e.g., to specific cases where the overhead due to the transition to RRC_CONNECTED may have more impact than the reduced efficiency of transmitting in RRC_INACTIVE. The wireless device 130 may therefore enable to guarantee a correct usage of the feature of transmission of data in inactive state, in the cases where it may improve the performance.

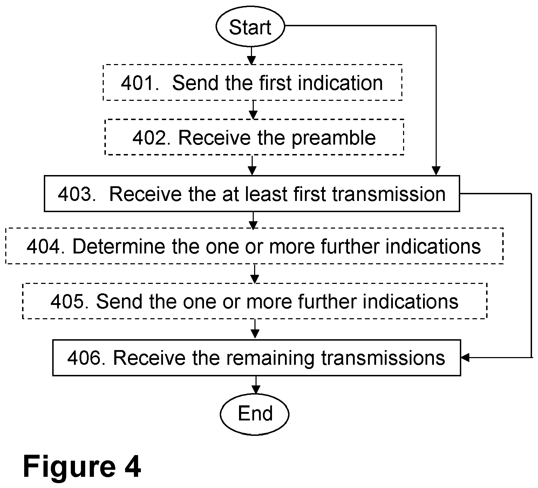

Embodiments of a method, performed by the network node 110, will now be described with reference to the flowchart depicted in **Figure 4**. The method may be understood to be for handling uplink transmission from the wireless device 130. The network node 110 operates in the wireless communications network 100.

In some embodiments, the wireless communications network 100 may support at least one of: New Radio (NR), Long Term Evolution (LTE), LTE for Machines (LTE-M), enhanced Machine Type Communication (eMTC), and Narrow Band Internet of Things (NB-IoT).

The method may be understood to be a computer-implemented method.

The method may comprise one or more of the following actions. In some embodiments, all the actions may be performed. In some embodiments, two or more actions may be performed. One or more embodiments may be combined, where applicable. Components from one embodiment may be tacitly assumed to be present in another embodiment and it will be obvious to a person skilled in the art how those components may be used in the other exemplary embodiments. All possible combinations are not described to simplify the description. A non-limiting example of the method performed by the network node 110 is depicted in Figure 4. In Figure 4, optional actions in some embodiments may be represented with dashed lines. The detailed description of some of the following corresponds to the same references provided above, in relation to the actions described for the wireless device 130 and will thus not be repeated here to simplify the description. The one or more further indications may be, for example, RRC signalling, DCIs, RRCResume, if e.g., sent by the network node 110, or a configured rule.

**Action 401**

In this Action 401, the network node 110 may send the first indication to the wireless device 130. The first indication may indicate at least one of: i) the threshold, ii) the maximum number (N) of transmissions allowed in the plurality, and iii) whether or not transmission of more than one transmission of data in inactive state, e.g., RRC_INACTIVE state, is allowed.

The sending in this Action 401 may comprise e.g., transmitting e.g., via the first link 141.

In some embodiments, the threshold may be selected based on the condition of the radio link between the wireless device 130 and the network node 110 to be used for the reception of the data. The condition of the radio link may be based on the measured RSRP.

In some examples, the data may be "Small Data".

**Action 402**

In this Action 402, the network node 110 may receive the preamble from the wireless device 130. The preamble may indicate whether or not the size of the buffer of the data for uplink transmission obtained by the wireless device 130 in inactive state may be smaller than the threshold.

In some examples, the wireless device 130 may have determined which preamble to use, of the plurality of preambles. Each of the preambles in the plurality may e.g., indicate different outcomes of the determination performed in Action 302.

**Action 403**

In this Action 403, the network node 110 receives, from the wireless device 130, at least the first transmission comprising the first subset of data obtained by the wireless device 130 in inactive state, and the explicit or implicit indication of the number of remaining transmissions of the plurality of transmissions that are needed to send the remaining data. The receiving in this Action 403 of the at least first transmission is performed in inactive state.

The receiving in this Action 403 may be performed, e.g., via the first link 141.

The remaining obtained data may be understood as a second subset of the obtained data, which may not overlap with the data in the first subset. That is, it may be understood as the part of the obtained data that may not have been received yet, e.g., in the first transmission.

The indication, e.g., if implicit, may not comprise the number of the remaining transmissions, but the number of the remaining transmissions may be derivable from the indication. For example, the indication may comprise an amount of data remaining to be transmitted in the remaining transmissions. Other variants are possible.

The indication may be e.g., a BSR, or a MAC CE.

The receiving in this Action 403 of the at least first transmission may be performed when the wireless device 130 may be in inactive state.

The receiving in this Action 403 of the at least first transmission may be based on whether or not the size of the buffer of data for uplink transmission may be smaller than the threshold.

**Action 404**

In this Action 404, the network node 110 may determine the one or more further indications to be sent to the wireless device 130, e.g., which, one or more further indications to be sent to the wireless device 130.

Determining in this Action 404 may comprise deciding or calculating.

The determining may be based on any of the following. First, the explicit or implicit indication of the number of remaining transmissions of the plurality of transmissions that may be needed to send the remaining obtained data, received from the wireless device 130. Second, any of the one or more criteria. The one or more criteria may be selected from: i) the condition of the radio link between the wireless device 130 and the network node 110 to be used for the reception of the data, that is, the first link 141, ii) the size of the user payload in the data, and iii) the second indication of load of the cell 120 wherein the network node 110 may be to receive the data. Other variants may also be possible. Third, at least one of: i) the transport block sizes allowed to be used for the plurality of transmissions, e.g., wherein the first indication may have been received in inactive state, and ii) the modulation and coding schemes allowed to be used for the plurality of transmissions, e.g., wherein the first indication may have been received in inactive state. Other variants are also possible. Fourth, the received preamble from the wireless device 130. Fifth, one or more of: i) the threshold, ii) the maximum number (N), of transmissions allowed in the plurality, and iii) whether or not transmission of more than one transmission of data in inactive state, e.g., RRC_INACTIVE state, may be allowed. Sixth, the received third indication. Other variants may be possible.

The network node 110 may then send the determined one or more further indications in Action 405.

**Action 405**

In this Action 405, the network node 110 may send the one or more further indications to the wireless device 130, as determined in Action 404.

The one or more further indications may be sent by the network node 110, e.g., broadcasted in the cell.

In some examples, the one or more further indications may be sent by the network node 110 and may be based on the received explicit or implicit indication.

**Action 406**

In this Action 406, the network node 110 receives, from the wireless device 130, the remaining transmissions in the plurality of transmissions. The receiving in this Action 406 of the remaining transmissions is in inactive state or in connected state based on the one or more further indications. The one or more further indications are one of: sent by the network node 110 in Action 405, and configured at the wireless device 130.

The receiving in this Action 406 may be performed, e.g., via the first link 141.

The one or more further indications may be, for example, RRC signalling, DCIs, RRCResume, if e.g., sent by the network node 110, or a configured rule.

In some embodiments, the receiving in this Action 406 may be further based on one or more criteria. The one or more criteria may be selected from: i) the condition of the radio link between the wireless device 130 and the network node 110 to be used for the transmission, or reception, of the data, ii) the size of the user payload in the data, iii) the second indication of the load of the cell 120 wherein the network node may receive the data, and iv) the another indication sent by the network node 110. Other variants are also possible.

In some embodiments, the one or more further indications may be sent by the network node 110. In some particular embodiments, the one or more further indications may indicate at least one of: i) the transport block sizes allowed to be used for the plurality of transmissions, wherein the first indication may be sent in inactive state, and ii) modulation coding schemes allowed to be used for the plurality of transmissions, wherein the first indication may be sent in inactive state. Other variants are also possible.

Every transmission in the plurality of transmissions may comprise a respective identifier.

In some embodiments, at least one of: a) the implicit indication of the number of remaining transmissions may comprise the report on the size of the buffer, e.g., a BSR; in some of such embodiments, the remaining transmission of the plurality of transmissions may be received in inactive state; b) the last transmission in time of the plurality of transmissions may comprise the third indication; in some of such embodiments, the third indication may indicate that the connection with the network node 110 may need to be released; and c) each of the remaining transmissions that may be received in inactive state may be triggered by a respective further indication, of the one or more further indications, sent by the network node 110, e.g., while the wireless device 130 may be in inactive state. The respective further indication may be the downlink control information (DCI) message. Other variants are also possible.

The report on the size of the buffer may be the BSR.

Some embodiments herein will now be further described with some non-limiting examples.

In the following description, any reference to a/the UE, or simply "UE" may be understood to equally refer the wireless device 130; any reference to a/the gNB, a/the NW and/or a/the network may be understood to equally refer to the network node 110; any reference to a/the DVT may be understood to equally refer to the threshold; any reference to a/the $P_L$ may be understood to equally refer to the obtained data; any reference to a/the cell may be understood to equally refer to the cell 120.

In this section the following assumptions and terminology may be considered.

A generic UE may be, in some cases, is, in RRC_INACTIVE state and may have to transmit $P_L$ bits of data. This UE may be in channel conditions such that it may be able to perform a UL data transmission in RRC_INACTIVE state with Modulation Coding Scheme (MCS) index $MCS_{INACTIVE}$ and, once in RRC_CONNECTED, it may perform an UL data transmission with MCS index $MCS_{CONNECTED}$, so that $MCS_{INACTIVE} \leq MCS_{CONNECTED}$.

Assuming the UE may have the capability to transmit using a certain maximum bandwidth both in RRC_INACTIVE and RRC_CONNECTED, the aforementioned MCS indexes may result in two maximum Transport Block Sizes, $TBS_{INACTIVE}$ and $TBS_{CONNECTED}$, respectively, with $TBS_{INACTIVE} \leq TBS_{CONNECTED}$.

In legacy behavior, Msg3 may carry RRC messages and possibly some assistance information that the gNB may use to optimize the procedure. In a baseline example, the same behavior may be assumed, and that the assistance information transmitted may be the Buffer Status Report (BSR).

In each TB, not only user data may be present. As mentioned above, Msg3 may comprise an RRC message, BSR and various Medium Access Control (MAC) subheaders. If data is included, some further space may be used for the MAC subheader and upper layers' headers. Similarly, also in the subsequent RRC_INACTIVE and RRC_CONNECTED transmissions, part of the TB may be used to deliver MAC and upper layer headers. To keep the discussion simple, it may be assumed that $S_{Msg3}$, $S_{INACTIVE}$ and $S_{CONNECTED}$ represent the amount of user data that may be included in Msg3, RRC_INACTIVE PUSCH and RRC_CONNECTED PUSCH, respectively.

From the RRC point of view, the UE may perform an RRC Resume procedure, although the content of the messages at the lower layer may be different.

## Procedure Description and Triggering Logic

**Figure 5** is a signalling diagram illustrating a legacy procedure to facilitate a comparison with embodiments herein, which will be illustrated later, in Figure 6. After a UE may have been configured at 501, and while it may be camping in RRC_INACTIVE at 502, new data may arrive at 503, and its amount, $P_L$, may be compared to the threshold, e.g., a configured Data Volume Threshold (DVT). If $P_L$ is greater than the threshold, which is the case depicted in Figure 5 at 504, the UE may perform the legacy RRC Resume procedure by sending a legacy preamble at 505, waiting for Msg2, which arrives at 506 with DCI and at 507 with the RAR, and then sending a Msg3 at 508 which may consist only in the RRCResumeRequest message. Since a legacy preamble may be used, the gNB may allocate a legacy-sized TB for Msg3 transmission. Then, once Msg4 with RRCResume may have been received at 510, the UE may transition to RRC_CONNECTED at 511 and perform the data transfer in RRC_CONNECTED at 512, and then the connection may be released by the gNB once the transfer may have been completed at 513 with DCI and at 514 with an RRCRelease message. The UE may then return to RRC_INACTIVE state at 515. A BSR may be included to so that the network node 110 may use this information to release the connection as soon as the transfer may be completed, or the release may be based on an inactivity timer.

Figure 6 is a signalling diagram illustrating a procedure according to embodiments herein, wherein the wireless device 130 is a UE and the network node 110 is a gNB. After the wireless device 130 may have been configured according to Action 301 and Action 401, e.g., receiving the DVT, and while it may be camping in RRC_INACTIVE at 601, new data may arrive, $P_L$ bits, at 602, and its amount may be compared, e.g., according to Action 302, to the threshold, e.g., the configured DVT, see the description of Figure 3 for further details on the signaling and configuration. If $P_L$ is smaller than the threshold, e.g., as determined in Action 302, the UE may try to send, e.g., according to Action 304 and/or Action 306, all the data in RRC_INACTIVE, irrespective of whether multiple SDT transmissions may be required. It may start by sending, e.g., according to Action 303, a special SDT preamble which may indicate to the gNB that a larger TB may be required for Msg3 transmission. The gNB may receive the SDT preamble according to Action 402, and send an Msg2 with DCI at 603, and as a RAR at 604. Msg3 may contain the legacy RRCResumeRequest message, the first segment of Data, that is, the first subset of the obtained data depicted in Figure 6 as Data 1, and the indication, here the BSR, or any other assistance data, which may inform the gNB on how much data there may be left, so that it may schedule the appropriate number of UL transmissions. This may be received by the gNB according to Action 403. The gNB may keep scheduling new UL transmissions in accordance with Action 405 by sending a new data DCI, until all the data may be transmitted. For every further indication received from the network node 110 according to Action 305, the UE may send a further subset of the data obtained by the wireless device 130 in inactive state. That is, Data 2, Data 3, ..., Data N, as depicted in Figure 6. At the end of the transfer, the connection may be released, in a new iteration of Action 405 through the RRCRelease message. If the first transmission in Msg3 is sufficient, the gNB may simply release the connection in Msg4, in a new iteration of Action 405.

In a further example, a UE that may decide to perform the legacy procedure may still include the BSR in Msg3. Based on the BSR, the gNB may decide, e.g., according to Action 404, to perform some transmission in RRC_INACTIVE after the legacy Msg3, regardless of the DVT, by using an appropriate signaling.

In examples related to embodiments herein, the indication may not be sent, e.g., the wireless device 130 may refrain from sending the indication, if the network node 110 knows already how many transmissions may be needed, as may happen e.g., due to a previous configuration, or if only 1 may be needed (Msg3). Consequently, the indication may not be received by the network node 110. That is, the at least first transmission may be received lacking, or in the absence of the indication, e.g., the wireless device 130 may have refrained from sending the indication, if the network node 110 knows already how many transmissions may not needed, as may happen e.g., due to a previous configuration, or if only 1 may be needed (Msg3).

Certain embodiments disclosed herein may provide one or more of the following technical advantage(s), which may be summarized as follows. In 3GPP, as it is shown by the aforementioned agreements, the idea of transmitting data in RRC_INACTIVE has already been accepted. Some embodiments herein, may be understood to enable the network node 110 to control this mechanism, e.g., according to Action 404 and/or Action 405, so that the transmission of further data in RRC_INACTIVE may be limited, e.g., only to the cases where energy consumption, latency or overall channel occupation may be minimized or kept under control. In fact, the transmission of data in RRC_INACTIVE may be less efficient than when it may be transmitted in RRC_CONNECTED, so this mechanism may be intended for specific corner cases where the overhead due to the transition to RRC_CONNECTED may have more impact than the reduced efficiency of transmitting in RRC_INACTIVE.

Embodiments herein, may be understood to enable to guarantee a correct usage of the feature of transmission of data in inactive state, in the cases where it may improve the performance.

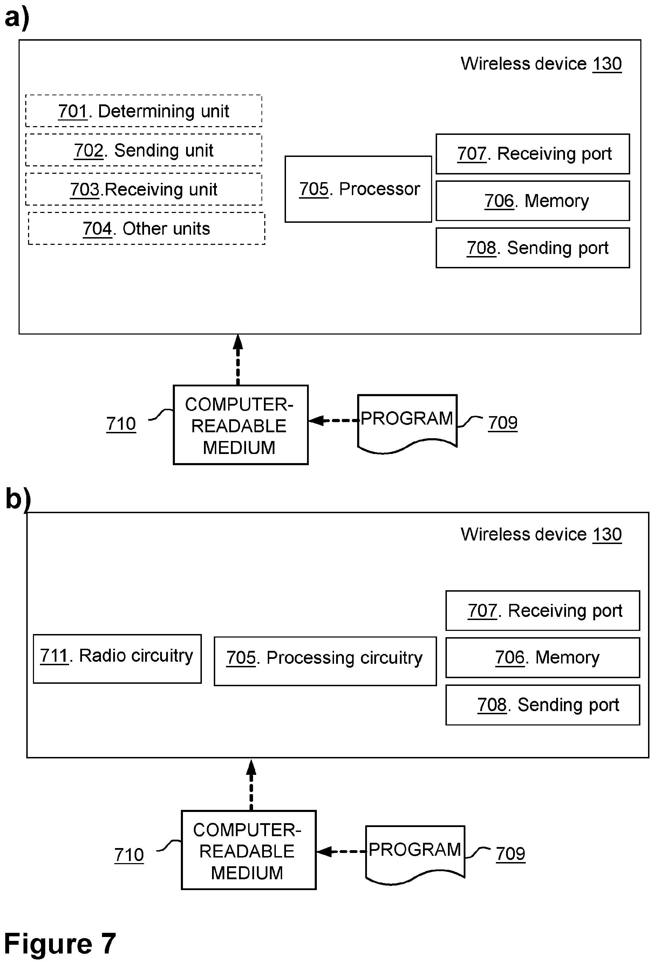

**Figure 7** depicts two different examples in panels a) and b), respectively, of the arrangement that the wireless device 130 may comprise to perform the method actions described above in relation to Figure 3, Figure 5 and/or Figure 6. In some embodiments, the wireless device 130 may comprise the following arrangement depicted in **Figure 7a**. The wireless device 130 may be understood to be for handling uplink transmission to the network node 110. The wireless device 130 is configured to operate in the wireless communications network 100.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the wireless device 130 and will thus not be repeated here. For example, in some embodiments, the wireless communications network 100 may support at least one of: New Radio (NR), Long Term Evolution (LTE), LTE for Machines (LTE-M), enhanced Machine Type Communication (eMTC), and Narrow Band Internet of Things (NB-IoT).

In Figure 7, optional units are indicated with dashed boxes.

The wireless device 130 is configured to perform the determining of Action 302, e.g. by means of a determining unit 701 within the wireless device 130, configured to determine while the wireless device 130 is configured to be in inactive state, whether or not the size of the buffer of data for uplink transmission configured to be obtained in inactive state is smaller than the threshold.

The wireless device 130 is configured to perform the sending of Action 304, e.g. by means of a sending unit 702, configured to send, to the network node 110, at least the first transmission configured to comprise the first subset of the obtained data, and the explicit or implicit indication of the number of remaining transmissions of the plurality of transmissions that are configured to be needed to send the remaining obtained data. The sending of the at least first transmission is configured to be based on the result of the determining and is configured to be performed in inactive state.

The wireless device 130 is configured to perform the sending of Action 306, e.g. by means of the sending unit 702, configured to, send, to the network node 110, the remaining transmissions in the plurality of transmissions. The sending of the remaining transmissions is configured to be in inactive state or in connected state based on the one or more further indications. The one or more further indications are configured to be one of: received from the network node 110 and configured at the wireless device 130.

In some embodiments, the one or more further indications may be configured to be received from the network node 110 and may be configured to be based on the explicit or implicit indication configured to be sent.

The wireless device 130 may be configured to perform the sending of Action 303, e.g. by means of the sending unit 702 within the wireless device 130, configured to, send the preamble to the network node 110. The preamble is configured to indicate the result of the determination.

The wireless device 130 may be configured to perform the receiving of Action 301, e.g. by means of a **receiving unit 703**, configured to, receive the first indication from the network node 110. The first indication may be configured to indicate at least one of: i) the threshold, ii) the maximum number (N) of transmissions configured to be allowed in the plurality, and iii) whether or not transmission of more than one transmission of data in inactive state, e.g., RRC_INACTIVE state, may be allowed.

In some embodiments, the sending of the remaining transmissions may be further configured to be based on one or more criteria configured to be selected from: i) the condition of the radio link between the wireless device 130 and the network node 110 configured to be used for the transmission of the data configured to be obtained, ii) the size of the user payload in the data configured to be obtained, iii) the second indication of load of the cell 120 wherein the wireless device 130 may be configured to send the data configured to be obtained, and iv) the another indication configured to be received from the network node 110.

In some embodiments, the one or more further indications may be configured to be received from the network node 110. The one or more further indications may be configured to indicate at least one of: i) the transport block sizes configured to be allowed to be used for the plurality of transmissions, wherein the first indication may be configured to be received in inactive state, and ii) the modulation coding schemes configured to be allowed to be used for the plurality of transmissions, wherein the first indication may be configured to be received in inactive state.

In some embodiments, the threshold may be configured to be selected based on the condition of the radio link between the wireless device 130 and the network node 110 to be used for the transmission of the data configured to be obtained.

In some embodiments, at least one of the following options may apply. According to a first option, the implicit indication of the number of remaining transmissions may be configured to comprise the report on the size of the buffer, and the remaining transmission of the plurality of transmissions may be configured to be performed in inactive state. According to a second option, the last transmission in time of the plurality of transmissions may be configured to comprise the third indication configured to indicate that a connection with the network node 110 is to be released. According to a third option, each of the remaining transmissions configured to be sent in inactive state may be configured to be triggered by a respective further indication, of the one or more further indications, configured to be received from the network node 110 while the wireless device 130 may be in inactive state. The respective further indication may be configured to be the downlink control information message.

The wireless device 130 may be configured to perform the receiving of Action 305, e.g. by means of the receiving unit 703, configured to, receive the one or more further indications from the network node 110. The transmission of the remaining transmissions may be configured to be based on the one or more further indications configured to be received.

In some embodiments, every transmission in the plurality of transmissions may be configured to comprise the respective identifier.

In some embodiments, the report on the size of the buffer may be configured to be the BSR.

In some embodiments, the condition of the radio link may be configured to be based on the measured RSRP.

**Other units 704** may be comprised in the wireless device 130.

The embodiments herein in the wireless device 130 may be implemented through one or more processors, such as a **processor 705** in the wireless device 130 depicted in Figure 7a, together with computer program code for performing the functions and actions of the embodiments herein. A processor, as used herein, may be understood to be a hardware component. The program code mentioned above may also be provided as a computer program product, for instance in the form of a data carrier carrying computer program code for performing the embodiments herein when being loaded into the wireless device 130. One such carrier may be in the form of a CD ROM disc. It is however feasible with other data carriers such as a memory stick. The computer program code may furthermore be provided as pure program code on a server and downloaded to the wireless device 130.

The wireless device 130 may further comprise a **memory 706** comprising one or more memory units. The memory 706 is arranged to be used to store obtained information, store data, configurations, schedulings, and applications etc. to perform the methods herein when being executed in the wireless device 130.

In some embodiments, the wireless device 130 may receive information from, e.g., the network node 110, through a **receiving port 707**. In some embodiments, the receiving port 707 may be, for example, connected to one or more antennas in wireless device 130. In other embodiments, the wireless device 130 may receive information from another structure in the wireless communications network 100 through the receiving port 707. Since the receiving port 707 may be in communication with the processor 705, the receiving port 707 may then send the received information to the processor 705. The receiving port 707 may also be configured to receive other information.

The processor 705 in the wireless device 130 may be further configured to transmit or send information to e.g., the network node 110, or another structure in the wireless communications network 100, through a **sending port 708**, which may be in communication with the processor 705, and the memory 706.

Those skilled in the art will also appreciate that the different units 701-704 described above may refer to a combination of analog and digital modules, and/or one or more processors configured with software and/or firmware, e.g., stored in memory, that, when executed by the one or more processors such as the processor 705, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Also, in some embodiments, the different units 701-704 described above may be implemented as one or more applications running on one or more processors such as the processor 705.

Thus, the methods according to the embodiments described herein for the wireless device 130 may be respectively implemented by means of a **computer program 709** product, comprising instructions, i.e., software code portions, which, when executed on at least one processor 705, cause the at least one processor 705 to carry out the actions described herein, as performed by the wireless device 130. The computer program 709 product may be stored on a **computer-readable storage medium 710**. The computer-readable storage medium 710, having stored thereon the computer program 709, may comprise instructions which, when executed on at least one processor 705, cause the at least one processor 705 to carry out the actions described herein, as performed by the wireless device 130. In some embodiments, the computer-readable storage medium 710 may be a non-transitory computer-readable storage medium, such as a CD ROM disc, or a memory stick. In other embodiments, the computer program 709 product may be stored on a carrier containing the computer program 709 just described, wherein the carrier is one of an electronic signal, optical signal, radio signal, or the computer-readable storage medium 710, as described above.

The wireless device 130 may comprise a communication interface configured to facilitate communications between the wireless device 130 and other nodes or devices, e.g., the network node 110. The interface may, for example, include a transceiver configured to transmit and receive radio signals over an air interface in accordance with a suitable standard.

In other embodiments, the wireless device 130 may comprise the following arrangement depicted in **Figure 7b**. The wireless device 130 may comprise a **processing circuitry 705**, e.g., one or more processors such as the processor 705, in the wireless device 130 and the memory 706. The wireless device 130 may also comprise a **radio circuitry 711**, which may comprise e.g., the receiving port 707 and the sending port 708. The processing circuitry 711 may be configured to, or operable to, perform the method actions according to Figure 3, Figure 5 and/or Figure 6, in a similar manner as that described in relation to Figure 7a. The radio circuitry 711 may be configured to set up and maintain at least a wireless connection with the network node 110. Circuitry may be understood herein as a hardware component.

Hence, embodiments herein also relate to the wireless device 130 comprising the processing circuitry 705 and the memory 706, said memory 706 containing instructions executable by said processing circuitry 705, whereby the wireless device 130 is operative to perform the actions described herein in relation to the wireless device 130, e.g., in Figure 3, Figure 5 and/or Figure 6.

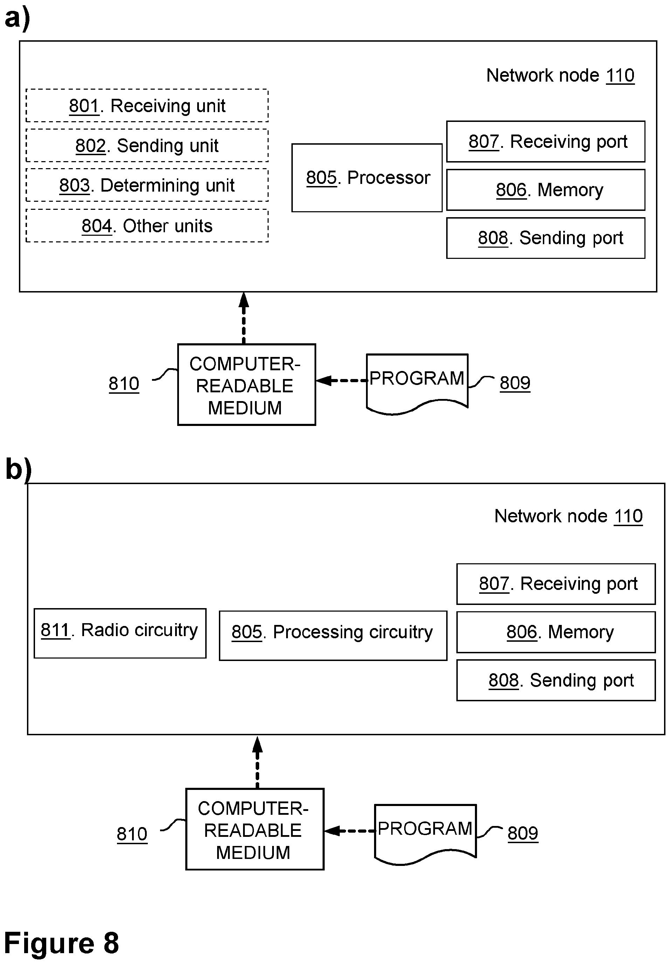

**Figure 8** depicts two different examples in panels a) and b), respectively, of the arrangement that the network node 110 may comprise to perform the method actions described above in relation to Figure 4, Figure 5 and/or Figure 6. In some embodiments, the network node 110 may comprise the following arrangement depicted in **Figure 8a**. The network node 110 may be understood to be for handling uplink transmission from the wireless device 130. The network node 110 is configured to operate in the wireless communications network 100.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the wireless device 130 and will thus not be repeated here. For example, in some embodiments, the wireless communications network 100 may support at least one of: New Radio (NR), Long Term Evolution (LTE), LTE for Machines (LTE-M), enhanced Machine Type Communication (eMTC), and Narrow Band Internet of Things (NB-IoT).

In Figure 8, optional modules are indicated with dashed boxes.

The network node 110 is configured to perform the receiving of Action 403, e.g. by means of a **receiving unit 801** within the network node 110, configured to receive, from the wireless device 130, at least the first transmission configured to comprise the first subset of data configured to be obtained by the wireless device 130 in inactive state, and the explicit or implicit indication of the number of remaining transmissions of the plurality of transmissions that are configured to be needed to send the remaining data. The receiving of the at least first transmission is configured to be performed in inactive state.

The network node 110 is configured to perform the receiving of Action 406, e.g. by means of the receiving unit 801, configured to receive, from the wireless device 130, the remaining transmissions in the plurality of transmissions. The receiving of the remaining transmissions may be configured to be in inactive state or in connected state based on the one or more further indications. The one or more further indications may be configured to be one of: sent by the network node 110 and configured at the wireless device 130.

The one or more further indications may be configured to be sent by the network node 110 and may be configured to be based on the explicit or implicit indication configured to be received.

The network node 110 may be configured to perform the receiving of Action 402, e.g. by means of the receiving unit 801, configured to receive the preamble from the wireless device 130. The preamble may be configured to indicate whether or not the size of the buffer of the data for uplink transmission configured to be obtained by the wireless device 130 in inactive state is smaller than the threshold.

The network node 110 may be configured to perform the sending of Action 401, e.g. by means of a **sending unit 802**, configured to send the first indication to the wireless device 130. The first indication may be configured to indicate at least one of: i) the threshold, ii) the maximum number (N) of transmissions allowed in the plurality, and iii) whether or not transmission of more than one transmission of data in inactive state, e.g., RRC_INACTIVE state, is allowed.

In some embodiments, the threshold may be configured to be selected based on the condition of the radio link between the wireless device 130 and the network node 110 to be used for the reception of the data.

In some embodiments, the receiving may be configured to be further based on the one or more criteria configured to be selected from: i) the condition of the radio link between the wireless device 130 and the network node 110 configured to be used for the transmission of the data, ii) the size of the user payload in the data, iii) the second indication of load of the cell 120 wherein the network node 110 may be configured to receive the data, and iv) the another indication configured to be sent by from the network node 110.

In some embodiments, the one or more further indications may be configured to be sent by the network node 110. The one or more further indications may be configured to indicate at least one of: i) the transport block sizes configured to be allowed to be used for the plurality of transmissions, wherein the first indication may be configured to be sent in inactive state, and ii) the modulation coding schemes configured to be allowed to be used for the plurality of transmissions, wherein the first indication may be configured to be sent in inactive state.

In some embodiments, at least one of the following options may apply. According to a first option, the implicit indication of the number of remaining transmissions may be configured to comprise the report on the size of the buffer, and the remaining transmission of the plurality of transmissions may be configured to be performed in inactive state. According to a second option, the last transmission in time of the plurality of transmissions may be configured to comprise the third indication configured to indicate that the connection with the network node 110 is to be released. According to a third option, each of the remaining transmissions configured to be received in inactive state may be configured to be triggered by a respective further indication, of the one or more further indications, configured to be sent by the network node 110 while the wireless device 130 may be in inactive state. The respective further indication may be configured to be the downlink control information message.

The network node 110 may be configured to perform the sending of Action 406, e.g. by means of the sending unit 802 within the network node 110, configured to send the one or more further indications to the wireless device 130. The reception of the remaining transmissions may be configured to be based on the sent one or more further indications.

The network node 110 may be configured to perform the determining of Action 404, e.g. by means of a **determining unit 803**, configured to determine the one or more further indications configured to be sent to the wireless device 130.

In some embodiments, every transmission in the plurality of transmissions may be configured to comprise the respective identifier.

In some embodiments, the report on the size of the buffer may be configured to be the BSR.

In some embodiments, the condition of the radio link may be configured to be based on the measured RSRP.

**Other units 804** may be comprised in the network node 110.

The embodiments herein in the network node 110 may be implemented through one or more processors, such as a **processor 805** in the network node 110 depicted in Figure 8a, together with computer program code for performing the functions and actions of the embodiments herein. A processor, as used herein, may be understood to be a hardware component. The program code mentioned above may also be provided as a computer program product, for instance in the form of a data carrier carrying computer program code for performing the embodiments herein when being loaded into the network node 110. One such carrier may be in the form of a CD ROM disc. It is however feasible with other data carriers such as a memory stick. The computer program code may furthermore be provided as pure program code on a server and downloaded to the network node 110.

The network node 110 may further comprise a **memory 806** comprising one or more memory units. The memory 806 is arranged to be used to store obtained information, store data, configurations, schedulings, and applications etc. to perform the methods herein when being executed in the network node 110.

In some embodiments, the network node 110 may receive information from, e.g., the wireless device 130, through a **receiving port 807.** In some embodiments, the receiving port 807 may be, for example, connected to one or more antennas in network node 110. In other embodiments, the network node 110 may receive information from another structure in the wireless communications network 100 through the receiving port 807. Since the receiving port 807 may be in communication with the processor 805, the receiving port 807 may then send the received information to the processor 805. The receiving port 807 may also be configured to receive other information.

The processor 805 in the network node 110 may be further configured to transmit or send information to e.g., the wireless device 130, or another structure in the wireless communications network 100, through a **sending port 808**, which may be in communication with the processor 805, and the memory 806.

Those skilled in the art will also appreciate that the different units 801-804 described above may refer to a combination of analog and digital modules, and/or one or more processors configured with software and/or firmware, e.g., stored in memory, that, when executed by the one or more processors such as the processor 805, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Also, in some embodiments, the different units 801-804 described above may be implemented as one or more applications running on one or more processors such as the processor 805.

Thus, the methods according to the embodiments described herein for the network node 110 may be respectively implemented by means of a **computer program 809** product, comprising instructions, i.e., software code portions, which, when executed on at least one processor 805, cause the at least one processor 805 to carry out the actions described herein, as performed by the network node 110. The computer program 809 product may be stored on a **computer-readable storage medium 810**. The computer-readable storage medium 810, having stored thereon the computer program 809, may comprise instructions which, when executed on at least one processor 805, cause the at least one processor 805 to carry out the actions described herein, as performed by the network node 110. In some embodiments, the computer-readable storage medium 810 may be a non-transitory computer-readable storage medium, such as a CD ROM disc, or a memory stick. In other embodiments, the computer program 809 product may be stored on a carrier containing the computer program 809 just described, wherein the carrier is one of an electronic signal, optical signal, radio signal, or the computer-readable storage medium 810, as described above.

The network node 110 may comprise a communication interface configured to facilitate communications between the network node 110 and other nodes or devices, e.g., the wireless device 130. The interface may, for example, include a transceiver configured to transmit and receive radio signals over an air interface in accordance with a suitable standard.

In other embodiments, the network node 110 may comprise the following arrangement depicted in **Figure 8b**. The network node 110 may comprise a **processing circuitry 805**, e.g., one or more processors such as the processor 805, in the network node 110 and the memory 806. The network node 110 may also comprise a **radio circuitry 811**, which may comprise e.g., the receiving port 807 and the sending port 808. The processing circuitry 805 may be configured to, or operable to, perform the method actions according to Figure 4, Figure 5 and/or Figure 6, in a similar manner as that described in relation to Figure 8a. The radio circuitry 811 may be configured to set up and maintain at least a wireless connection with the wireless device 130. Circuitry may be understood herein as a hardware component.

Hence, embodiments herein also relate to the network node 110 comprising the processing circuitry 805 and the memory 806, said memory 806 containing instructions executable by said processing circuitry 805, whereby the network node 110 is operative to perform the actions described herein in relation to the network node 110, e.g., in Figure 4, Figure 5 and/or Figure 6.

Embodiments herein may be related to NR, NR_Small Data_INACTIVE, SDT, MTC and/or IoT.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

As used herein, the expression "at least one of:" followed by a list of alternatives separated by commas, and wherein the last alternative is preceded by the "and" term, may be understood to mean that only one of the list of alternatives may apply, more than one of the list of alternatives may apply or all of the list of alternatives may apply. This expression may be understood to be equivalent to the expression "at least one of:" followed by a list of alternatives separated by commas, and wherein the last alternative is preceded by the "or" term.

**Further Extensions And Variations**

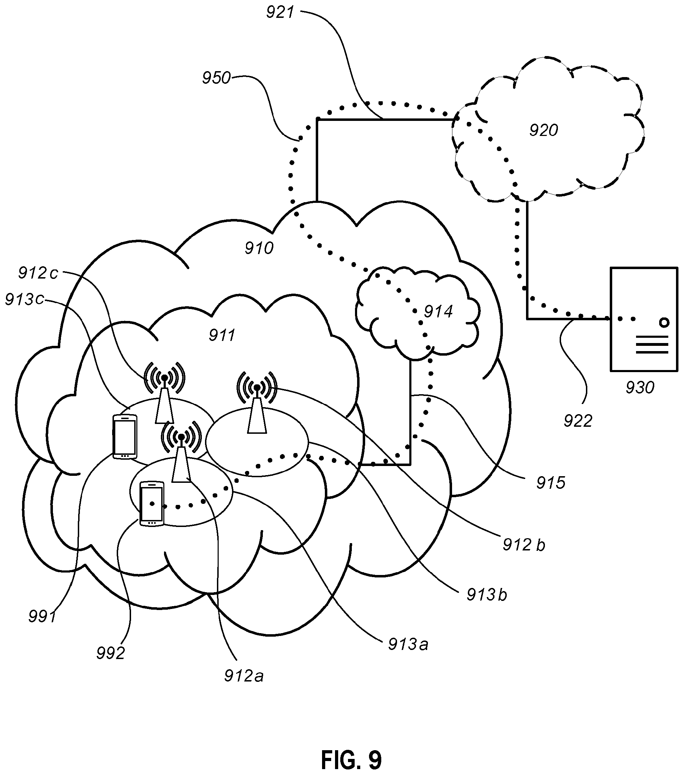

**Figure 9:** Telecommunication network connected via an intermediate network to a host computer in accordance with some embodiments

With reference to Figure 9, in accordance with an embodiment, a communication system includes telecommunication network 910 such as the wireless communications network 100, for example, a 3GPP-type cellular network, which comprises access network 911, such as a radio access network, and core network 914. Access network 911 comprises a plurality of network nodes such as the network node 110. For example, base stations 912a, 912b, 912c, such as NBs, eNBs, gNBs or other types of wireless access points, each defining a corresponding coverage area 913a, 913b, 913c. Each base station 912a, 912b, 912c is connectable to core network 914 over a wired or wireless connection 915. A plurality of user equipments, such as the wireless device 130 are comprised in the wireless communications network 100. In Figure 9, a first UE 991 located in coverage area 913c is configured to wirelessly connect to, or be paged by, the corresponding base station 912c. A second UE 992 in coverage area 913a is wirelessly connectable to the corresponding base station 912a. While a plurality of UEs 991, 992 are illustrated in this example, the disclosed embodiments are equally applicable to a situation where a sole UE is in the coverage area or where a sole UE is connecting to the corresponding base station 912. Any of the UEs 991, 992 are examples of the wireless device 130.

Telecommunication network 910 is itself connected to host computer 930, which may be embodied in the hardware and/or software of a standalone server, a cloud-implemented server, a distributed server or as processing resources in a server farm. Host computer 930 may be under the ownership or control of a service provider, or may be operated by the service provider or on behalf of the service provider. Connections 921 and 922 between telecommunication network 910 and host computer 930 may extend directly from core network 914 to host computer 930 or may go via an optional intermediate network 920. Intermediate network 920 may be one of, or a combination of more than one of, a public, private or hosted network; intermediate network 920, if any, may be a backbone network or the Internet; in particular, intermediate network 920 may comprise two or more sub-networks (not shown).

The communication system of Figure 9 as a whole enables connectivity between the connected UEs 991, 992 and host computer 930. The connectivity may be described as an over-the-top (OTT) connection 950. Host computer 930 and the connected UEs 991, 992 are configured to communicate data and/or signaling via OTT connection 950, using access network 911, core network 914, any intermediate network 920 and possible further infrastructure (not shown) as intermediaries. OTT connection 950 may be transparent in the sense that the participating communication devices through which OTT connection 950 passes are unaware of routing of uplink and downlink communications. For example, base station 912 may not or need not be informed about the past routing of an incoming downlink communication with data originating from host computer 930 to be forwarded (e.g., handed over) to a connected UE 991. Similarly, base station 912 need not be aware of the future routing of an outgoing uplink communication originating from the UE 991 towards the host computer 930.

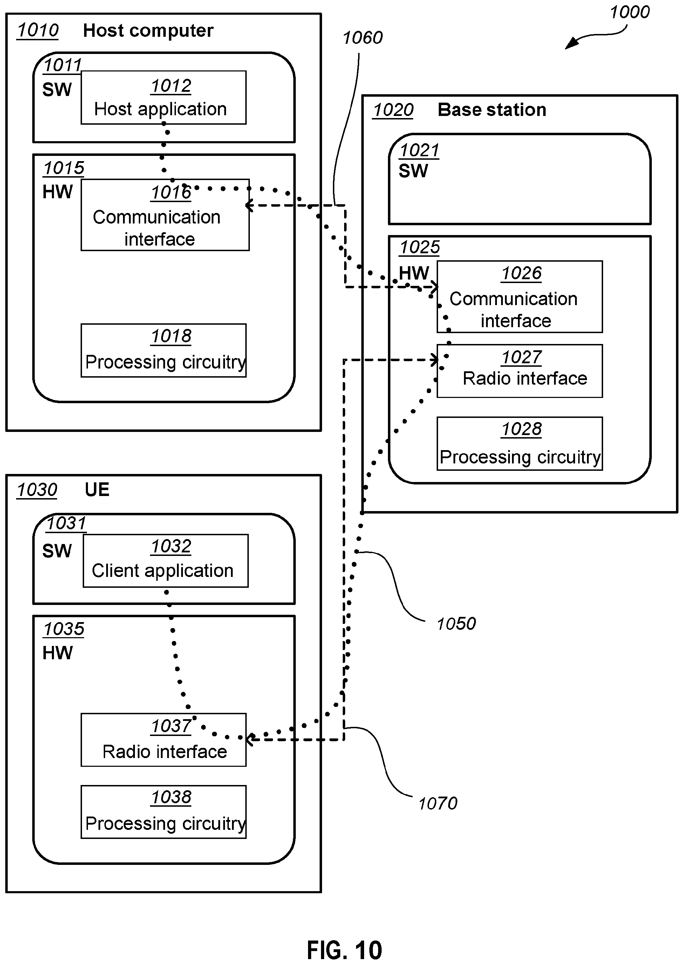

In relation to Figures 10, 11, 12, 13, and 14, which are described next, it may be understood that a UE is an example of the wireless device 130, and that any description provided for the UE equally applies to the wireless device 130. It may be also understood that the base station is an example of the network node 110, and that any description provided for the base station equally applies to the network node 110.

Figure 10: Host computer communicating via a base station with a user equipment over a partially wireless connection in accordance with some embodiments

Example implementations, in accordance with an embodiment, of the wireless device 130, e.g., a UE, the network node 110, e.g., a base station and host computer discussed in the preceding paragraphs will now be described with reference to Figure 10. In communication system 1000, such as the wireless communications network 100, host computer 1010 comprises hardware 1015 including communication interface 1016 configured to set up and maintain a wired or wireless connection with an interface of a different communication device of communication system 1000. Host computer 1010 further comprises processing circuitry 1018, which may have storage and/or processing capabilities. In particular, processing circuitry 1018 may comprise one or more programmable processors, application-specific integrated circuits, field programmable gate arrays or combinations of these (not shown) adapted to execute instructions. Host computer 1010 further comprises software 1011, which is stored in or accessible by host computer 1010 and executable by processing circuitry 1018. Software 1011 includes host application 1012. Host application 1012 may be operable to provide a service to a remote user, such as UE 1030 connecting via OTT connection 1050 terminating at UE 1030 and host computer 1010. In providing the service to the remote user, host application 1012 may provide user data which is transmitted using OTT connection 1050.

Communication system 1000 further includes the network node 110, exemplified in Figure 10 as a base station 1020 provided in a telecommunication system and comprising hardware 1025 enabling it to communicate with host computer 1010 and with UE 1030. Hardware 1025 may include communication interface 1026 for setting up and maintaining a wired or wireless connection with an interface of a different communication device of communication system 1000, as well as radio interface 1027 for setting up and maintaining at least wireless connection 1070 with the wireless device 130, exemplified in Figure 10 as a UE 1030 located in a coverage area (not shown in Figure 10) served by base station 1020. Communication interface 1026 may be configured to facilitate connection 1060 to host computer 1010. Connection 1060 may be direct or it may pass through a core network (not shown in Figure 10) of the telecommunication system and/or through one or more intermediate networks outside the telecommunication system. In the embodiment shown, hardware 1025 of base station 1020 further includes processing circuitry 1028, which may comprise one or more programmable processors, application-specific integrated circuits, field programmable gate arrays or combinations of these (not shown) adapted to execute instructions. Base station 1020 further has software 1021 stored internally or accessible via an external connection.

Communication system 1000 further includes UE 1030 already referred to. Its hardware 1035 may include radio interface 1037 configured to set up and maintain wireless connection 1070 with a base station serving a coverage area in which UE 1030 is currently located. Hardware 1035 of UE 1030 further includes processing circuitry 1038, which may comprise one or more programmable processors, application-specific integrated circuits, field programmable gate arrays or combinations of these (not shown) adapted to execute instructions. UE 1030 further comprises software 1031, which is stored in or accessible by UE 1030 and executable by processing circuitry 1038. Software 1031 includes client application 1032. Client application 1032 may be operable to provide a service to a human or non-human user via UE 1030, with the support of host computer 1010. In host computer 1010, an executing host application 1012 may communicate with the executing client application 1032 via OTT connection 1050 terminating at UE 1030 and host computer 1010. In providing the service to the user, client application 1032 may receive request data from host application 1012 and provide user data in response to the request data. OTT connection 1050 may transfer both the request data and the user data. Client application 1032 may interact with the user to generate the user data that it provides.

It is noted that host computer 1010, base station 1020 and UE 1030 illustrated in Figure 10 may be similar or identical to host computer 930, one of base stations 912a, 912b, 912c and one of UEs 991, 992 of Figure 9, respectively. This is to say, the inner workings of these entities may be as shown in Figure 10 and independently, the surrounding network topology may be that of Figure 9.

In Figure 10, OTT connection 1050 has been drawn abstractly to illustrate the communication between host computer 1010 and UE 1030 via base station 1020, without explicit reference to any intermediary devices and the precise routing of messages via these devices. Network infrastructure may determine the routing, which it may be configured to hide from UE 1030 or from the service provider operating host computer 1010, or both. While OTT connection 1050 is active, the network infrastructure may further take decisions by which it dynamically changes the routing (e.g., on the basis of load balancing consideration or reconfiguration of the network).

Wireless connection 1070 between UE 1030 and base station 1020 is in accordance with the teachings of the embodiments described throughout this disclosure. One or more of the various embodiments improve the performance of OTT services provided to UE 1030 using OTT connection 1050, in which wireless connection 1070 forms the last segment. More precisely, the teachings of these embodiments may improve the latency, signalling overhead, and service interruption and thereby provide benefits such as reduced user waiting time, better responsiveness and extended battery lifetime.

A measurement procedure may be provided for the purpose of monitoring data rate, latency and other factors on which the one or more embodiments improve. There may further be an optional network functionality for reconfiguring OTT connection 1050 between host computer 1010 and UE 1030, in response to variations in the measurement results. The measurement procedure and/or the network functionality for reconfiguring OTT connection 1050 may be implemented in software 1011 and hardware 1015 of host computer 1010 or in software 1031 and hardware 1035 of UE 1030, or both. In embodiments, sensors (not shown) may be deployed in or in association with communication devices through which OTT connection 1050 passes; the sensors may participate in the measurement procedure by supplying values of the monitored quantities exemplified above, or supplying values of other physical quantities from which software 1011, 1031 may compute or estimate the monitored quantities. The reconfiguring of OTT connection 1050 may include message format, retransmission settings, preferred routing etc.; the reconfiguring need not affect base station 1020, and it may be unknown or imperceptible to base station 1020. Such procedures and functionalities may be known and practiced in the art. In certain embodiments, measurements may involve proprietary UE signaling facilitating host computer 1010's measurements of throughput, propagation times, latency and the like. The measurements may be implemented in that software 1011 and 1031 causes messages to be transmitted, in particular empty or 'dummy' messages, using OTT connection 1050 while it monitors propagation times, errors etc.

The wireless device 130 embodiments relate to Figure 3, Figure 6, Figure 7 and Figures 9-14.

The wireless device 130 may also be configured to communicate user data with a host application unit in a host computer 1010, e.g., via another link such as 1060.

The wireless device 130 may comprise an interface unit to facilitate communications between the wireless device 130 and other nodes or devices, e.g., the network node 110, the host computer 1010, or any of the other nodes. In some particular examples, the interface may, for example, include a transceiver configured to transmit and receive radio signals over an air interface in accordance with a suitable standard.

The wireless device 130 may comprise an arrangement as shown in Figure 7 or in Figure 10.

The network node 110 embodiments relate to Figure 4, Figure 6, Figure 8 and Figures 9-14.

The network node 110 may also be configured to communicate user data with a host application unit in a host computer 1010, e.g., via another link such as 1060.

The network node 110 may comprise an interface unit to facilitate communications between the network node 110 and other nodes or devices, e.g., the wireless device 130, the host computer 1010, or any of the other nodes. In some particular examples, the interface may, for example, include a transceiver configured to transmit and receive radio signals over an air interface in accordance with a suitable standard.

The network node 110 may comprise an arrangement as shown in Figure 8 or in Figure 10.

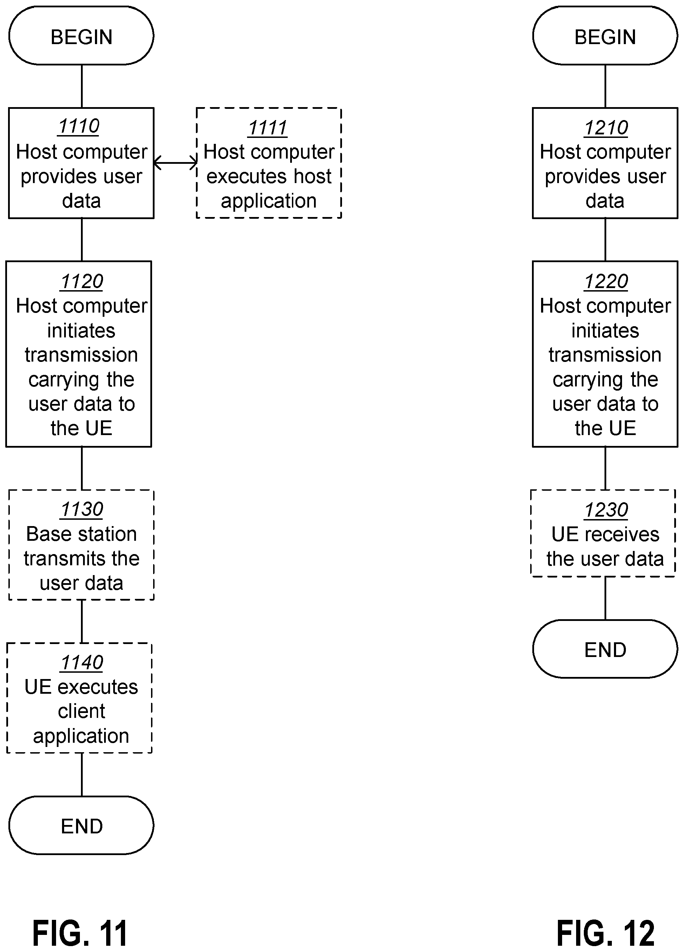

**Figure 11:** Methods implemented in a communication system including a host computer, a base station and a user equipment in accordance with some embodiments

Figure 11 is a flowchart illustrating a method implemented in a communication system, in accordance with one embodiment. The communication system includes a host computer, a base station and a UE which may be those described with reference to Figures 9 and 10. For simplicity of the present disclosure, only drawing references to Figure 11 will be included in this section. In step 1110, the host computer provides user data. In substep 1111 (which may be optional) of step 1110, the host computer provides the user data by executing a host application. In step 1120, the host computer initiates a transmission carrying the user data to the UE. In step 1130 (which may be optional), the base station transmits to the UE the user data which was carried in the transmission that the host computer initiated, in accordance with the teachings of the embodiments described throughout this disclosure. In step 1140 (which may also be optional), the UE executes a client application associated with the host application executed by the host computer.

**Figure 12:** Methods implemented in a communication system including a host computer, a base station and a user equipment in accordance with some embodiments

Figure 12 is a flowchart illustrating a method implemented in a communication system, in accordance with one embodiment. The communication system includes a host computer, a base station and a UE which may be those described with reference to Figures 9 and 10. For simplicity of the present disclosure, only drawing references to Figure 12 will be included in this section. In step 1210 of the method, the host computer provides user data. In an optional substep (not shown) the host computer provides the user data by executing a host application. In step 1220, the host computer initiates a transmission carrying the user data to the UE. The transmission may pass via the base station, in accordance with the teachings of the embodiments described throughout this disclosure. In step 1230 (which may be optional), the UE receives the user data carried in the transmission.

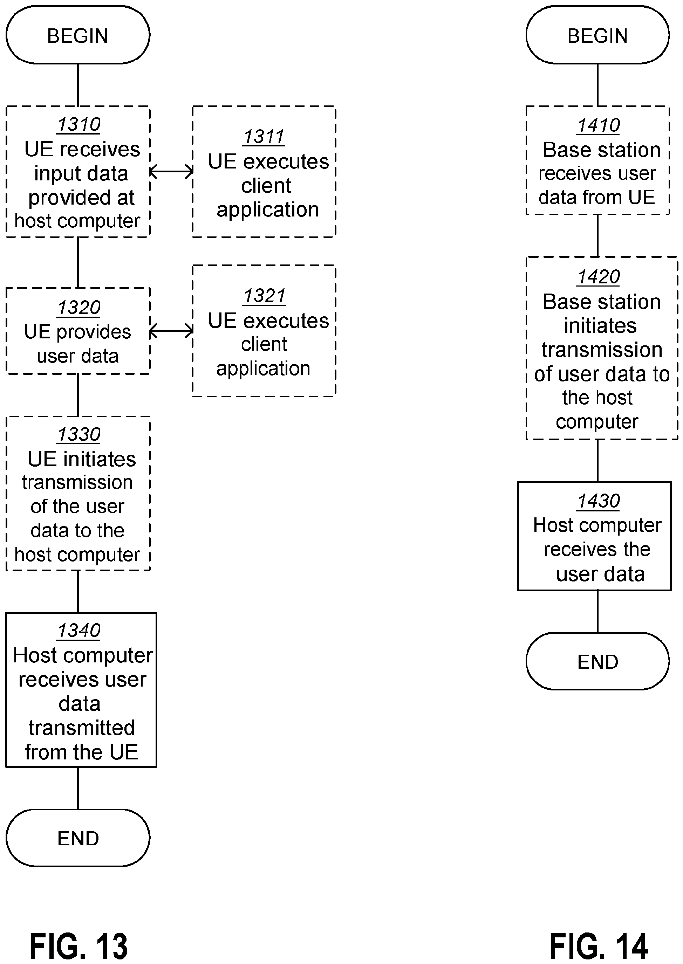

**Figure 13:** Methods implemented in a communication system including a host computer, a base station and a user equipment in accordance with some embodiments

Figure 13 is a flowchart illustrating a method implemented in a communication system, in accordance with one embodiment. The communication system includes a host computer, a base station and a UE which may be those described with reference to Figures 9 and 10. For simplicity of the present disclosure, only drawing references to Figure 13 will be included in this section. In step 1310 (which may be optional), the UE receives input data provided by the host computer. Additionally or alternatively, in step 1320, the UE provides user data. In substep 1321 (which may be optional) of step 1320, the UE provides the user data by executing a client application. In substep 1311 (which may be optional) of step 1310, the UE executes a client application which provides the user data in reaction to the received input data provided by the host computer. In providing the user data, the executed client application may further consider user input received from the user. Regardless of the specific manner in which the user data was provided, the UE initiates, in substep 1330 (which may be optional), transmission of the user data to the host computer. In step 1340 of the method, the host computer receives the user data transmitted from the UE, in accordance with the teachings of the embodiments described throughout this disclosure.

**Figure 14:** Methods implemented in a communication system including a host computer, a base station and a user equipment in accordance with some embodiments

Figure 14 is a flowchart illustrating a method implemented in a communication system, in accordance with one embodiment. The communication system includes a host computer, a base station and a UE which may be those described with reference to Figures 9 and 10. For simplicity of the present disclosure, only drawing references to Figure 14 will be included in this section. In step 1410 (which may be optional), in accordance with the teachings of the embodiments described throughout this disclosure, the base station receives user data from the UE. In step 1420 (which may be optional), the base station initiates transmission of the received user data to the host computer. In step 1430 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

## Claims

1. A method performed by a wireless device (130), the method being for handling uplink transmission to a network node (110), the wireless device (130) operating in a wireless communications network (100), and the method comprising:

   - *determining* (302) while the wireless device (130) is in inactive state, whether or not a size of a buffer of data for uplink transmission obtained in inactive state is smaller than a threshold, and
   - *sending* (304), to the network node (110), at least a first transmission comprising a first subset of the obtained data, and an explicit or implicit indication of a number of remaining transmissions of a plurality of transmissions that are needed to send the remaining obtained data, wherein the sending (304) of the at least first transmission is based on a result of the determining (302) and is performed in inactive state, and
   - *sending* (306), to the network node (110), the remaining transmissions in the plurality of transmissions, the sending (306) of the remaining transmissions being in inactive state or in connected state based on one or more further indications, the one or more further indications being one of: received from the network node (110) and configured at the wireless device (130), wherein at least one of:

     a) the method further comprises *receiving* (301) a first indication from the network node (110), the first indication indicating at least a maximum number, N, of transmissions allowed in the plurality, and
     b) the one or more further indications are received from the network node (110), and the one or more further indications indicate at least transport block sizes allowed to be used for the plurality of transmissions, wherein the transport block sizes are UE specifically configured and stored in a UE context, and wherein the first indication is received in inactive state.

2. The method according to claim 1, wherein the one or more further indications are received from the network node (110) and are based on the sent explicit or implicit indication.

3.  The method according to any of claims 1-2, further comprising:

    - *sending* (303) a preamble to the network node (110), the preamble indicating a result of the determination.

4.  The method according to any of claims 1-3, wherein the wireless device (130) receives the first indication from the network node (110), and wherein the first indication further indicates at least one of:

    i. the threshold, and
    ii. whether or not transmission of more than one transmission of data in inactive state, e.g., RRC_INACTIVE state, is allowed.

5.  The method according to any of claims 1-4, wherein the *sending* (306) of the remaining transmissions is further based on one or more criteria selected from:

    i. a condition of the radio link between the wireless device (130) and the network node (110) to be used for the transmission of the obtained data,
    ii. a size of a user payload in the obtained data,
    iii. a second indication of load of a cell (120) wherein the wireless device (130) is to send the obtained data,
    iv. another indication received from the network node (110).

6.  The method according to any of claims 1-5, wherein the one or more further indications are received from the network node (110), and wherein the one or more further indications further indicate modulation coding schemes allowed to be used for the plurality of transmissions, wherein the first indication is received in inactive state.

7.  The method according to any of claims 1-6, wherein the threshold is selected based on a condition of the radio link between the wireless device (130) and the network node (110) to be used for the transmission of the obtained data.

8.  The method according to any of claims 1-7, wherein at least one of:

    - the implicit indication of the number of remaining transmissions comprises a report on the size of the buffer, and wherein the remaining transmission of the plurality of transmissions are performed in inactive state,
    - a last transmission in time of the plurality of transmissions comprises a third indication indicating that a connection with the network node (110) is to be released, and
    - each of the remaining transmissions sent in inactive state is triggered by a respective further indication, of the one or more further indications, received from the network node (110) while the wireless device (130) is in inactive state, the respective further indication being a downlink control information message.

9.  The method according to any of claims 1-8, further comprising:

    - *receiving* (305) the one or more further indications from the network node (110), and wherein the transmission of the remaining transmissions is based on the received one or more further indications.

10. A method performed by a network node (110), the method being for handling uplink transmission from a wireless device (130), the network node (110) operating in a wireless communications network (100), and the method comprising:

    - *receiving* (403), from the wireless device (130), at least a first transmission comprising a first subset of data obtained by the wireless device (130) in inactive state, and an explicit or implicit indication of a number of remaining transmissions of a plurality of transmissions that are needed to send the remaining data, wherein the receiving (403) of the at least first transmission is performed in inactive state, and
    - *receiving* (406), from the wireless device (130), the remaining transmissions in the plurality of transmissions, the receiving (406) of the remaining transmissions being in inactive state or in connected state based on one or more further indications, the one or more further indications being one of: sent by the network node (110) and configured at the wireless device (130), and wherein at least one of:

        a) the method further comprises the network node (110) sending (401) a first indication to the wireless device (130), the first indication indicating at least a maximum number, N, of transmissions allowed in the plurality, and

b) the one or more further indications are sent by the network node (110), and the one or more further indications indicate at least transport block sizes allowed to be used for the plurality of transmissions, wherein the transport block sizes are UE specifically configured and stored in a UE context, and wherein the first indication is sent in inactive state.

11. The method according to claim 10, wherein the one or more further indications are sent by the network node (110) and are based on the received explicit or implicit indication.

12. The method according to any of claims 10-11, further comprising:

- *receiving* (402) a preamble from the wireless device (130), the preamble indicating whether or not a size of a buffer of the data for uplink transmission obtained by the wireless device (130) in inactive state is smaller than a threshold.

13. A wireless device (130), for handling uplink transmission to a network node (110), the wireless device (130) being configured to operate in a wireless communications network (100), and the wireless device (130) being further configured to:

- determine while the wireless device (130) is configured to be in inactive state, whether or not a size of a buffer of data for uplink transmission configured to be obtained in inactive state is smaller than a threshold, and
- send, to the network node (110), at least a first transmission configured to comprise a first subset of the obtained data, and an explicit or implicit indication of a number of remaining transmissions of a plurality of transmissions that are configured to be needed to send the remaining obtained data, wherein the sending of the at least first transmission is configured to be based on a result of the determining and is configured to be performed in inactive state, and
- send, to the network node (110), the remaining transmissions in the plurality of transmissions, the sending of the remaining transmissions being configured to be in inactive state or in connected state based on one or more further indications, the one or more further indications being configured to be one of: received from the network node (110) and configured at the wireless device (130), and wherein at least one of:

a) the wireless device (130) is further configured to receive a first indication from the network node (110), the first indication being configured to indicate at least a maximum number, N, of transmissions configured to be allowed in the plurality, and
b) the one or more further indications are configured to be received from the network node (110), and wherein the one or more further indications are configured to indicate at least transport block sizes configured to be allowed to be used for the plurality of transmissions, wherein the transport block sizes are UE specifically configured and configured to be stored in a UE context, and wherein the first indication is configured to be received in inactive state.

14. The wireless device (130) according to claim 13, wherein the Wireless device is adapted to perform the method of any of claims 2-9

15. A network node (110), for handling uplink transmission from a wireless device (130), the network node (110) being configured to operate in a wireless communications network (100), and the network node (110) being further configured to:

- receive, from the wireless device (130), at least a first transmission configured to comprise a first subset of data configured to be obtained by the wireless device (130) in inactive state, and an explicit or implicit indication of a number of remaining transmissions of a plurality of transmissions that are configured to be needed to send the remaining data, wherein the receiving of the at least first transmission is configured to be performed in inactive state, and
- receive, from the wireless device (130), the remaining transmissions in the plurality of transmissions, the receiving of the remaining transmissions being configured to be in inactive state or in connected state based on one or more further indications, the one or more further indications being configured to be one of: sent by the network node (110) and configured at the wireless device (130), and wherein at least one of:

a) the network node (110) is further configured to send a first indication to the wireless device (130), the first indication being configured to indicate at least a maximum number, N, of transmissions allowed in the plurality, and

b) the one or more further indications are configured to be sent by the network node (110), and the one or more further indications are configured to indicate at least one transport block sizes configured to be allowed to be used for the plurality of transmissions, wherein the transport block sizes are UE specifically configured and configured to be stored in a UE context, and wherein the first indication is configured to be sent in inactive state.

16. The network node (110) according to claim 15, wherein the Network node is adapted to perform the method of any of claims 11-12.

**Patentansprüche**

1. Verfahren, das von einer drahtlosen Vorrichtung (130) durchgeführt wird, wobei das Verfahren zur Handhabung von Uplink-Übertragung an einen Netzwerkknoten (110) ist, die drahtlose Vorrichtung (130) in einem Drahtloskommunikationsnetzwerk (100) operiert und das Verfahren umfasst:

- Bestimmen (302), während die drahtlose Vorrichtung (130) in einem inaktiven Zustand ist, ob eine Größe eines Puffers von Daten für die Uplink-Übertragung, die im inaktiven Zustand erhalten werden, kleiner als eine Schwelle ist oder nicht, und
- Senden (304) mindestens einer ersten Übertragung an den Netzwerkknoten (110), die eine erste Teilmenge der erhaltenen Daten und eine explizite oder implizite Angabe einer Anzahl von restlichen Übertragungen einer Mehrzahl von Übertragungen umfasst, die zum Senden der restlichen erhaltenen Daten benötigt wird, wobei das Senden (304) der mindestens einen ersten Übertragung auf einem Ergebnis des Bestimmens (302) resultiert und im inaktiven Zustand durchgeführt wird, und
- Senden (306) der restlichen Übertragungen in der Mehrzahl von Übertragungen an den Netzwerkknoten (110), wobei das Senden (306) der restlichen Übertragungen basierend auf einer oder mehreren weiteren Angaben im inaktiven Zustand oder im verbundenen Zustand erfolgt, wobei die eine oder die mehreren weiteren Angaben eines werden von: empfangen vom Netzwerkknoten (110) und konfiguriert an der drahtlosen Vorrichtung (130), wobei mindestens eines von Folgendem:

a) das Verfahren umfasst ferner ein Empfangen (301) einer ersten Angabe vom Netzwerkknoten (110), wobei die erste Angabe mindestens eine maximale Anzahl N von Übertragungen angibt, die in der Mehrzahl zugelassen ist, und
b) die eine oder die mehreren weiteren Angaben werden vom Netzwerkknoten (110) empfangen und die eine oder die mehreren weiteren Angaben geben zumindest Transportblockgrößen an, die für die Mehrzahl von Übertragungen verwendet werden dürfen, wobei die Transportblockgrößen UEspezifisch konfiguriert sind und in einem UE-Kontext gespeichert werden und wobei die erste Angabe im inaktiven Zustand empfangen wird.

2. Verfahren nach Anspruch 1, wobei die eine oder die mehreren weiteren Angaben vom Netzwerkknoten (110) empfangen werden und auf der gesendeten expliziten oder impliziten Angabe basieren.

3. Verfahren nach einem der Ansprüche 1 bis 2, ferner umfassend:

- Senden (303) einer Präambel an den Netzwerkknoten (110),wobei die Präambel ein Ergebnis der Bestimmung angibt.

4. Verfahren nach einem der Ansprüche 1 bis 3, wobei die drahtlose Vorrichtung (130) die erste Angabe vom Netzwerkknoten (110) empfängt und wobei die erste Angabe ferner mindestens eines von Folgenden angibt:

i. die Schwelle und,
ii. ob die Übertragung von mehr als einer Übertragung von Daten im inaktiven Zustand, z. B. RRC_INACTIVE-Zustand, zugelassen wird oder nicht.

5. Verfahren nach einem der Ansprüche 1 bis 4, wobei das Senden (306) der restlichen Übertragungen ferner auf einem oder mehreren Kriterien basiert, die ausgewählt werden aus:

i. einem Zustand der Funkverbindung zwischen der drahtlosen Vorrichtung (130) und dem Netzwerkknoten (110), die für die Übertragung der erhaltenen Daten verwendet werden soll,
ii. einer Größe einer Benutzer-Nutzlast in den erhaltenen Daten,
iii. einer zweiten Angabe von Last einer Zelle (120), in der die drahtlose Vorrichtung (130) die erhaltenen Daten senden soll,
iv. einer anderen Angabe, die vom Netzwerkknoten (110) empfangen wird.

6. Verfahren nach einem der Ansprüche 1 bis 5, wobei die eine oder die mehreren weiteren Angaben vom Netzwerkknoten (110) empfangen werden und wobei die eine oder die mehreren weiteren Angaben ferner Modulations- und Codierungsschemata angeben, die für die Mehrzahl von Übertragungen verwendet werden dürfen, wobei die erste Angabe im inaktiven Zustand empfangen wird.

7. Verfahren nach einem der Ansprüche 1 bis 6, wobei die Schwelle basierend auf einem Zustand der Funkverbindung zwischen der drahtlosen Vorrichtung (130) und dem Netzwerkknoten (110) ausgewählt wird, die für die Übertragung der erhaltenen Daten verwendet werden soll.

8. Verfahren nach einem der Ansprüche 1 bis 7, wobei mindestens eines von Folgendem:

- die implizite Angabe der Anzahl von restlichen Übertragungen umfasst eine Meldung der Größe des Puffers, und wobei die restliche Übertragung der Mehrzahl von Übertragungen im inaktiven Zustand durchgeführt wird,
- eine zeitlich letzte Übertragung der Mehrzahl von Übertragungen umfasst eine dritte Angabe, die angibt, dass eine Verbindung mit dem Netzwerkknoten (110) freigegeben werden soll, und
- jede der restlichen Übertragungen, die im inaktiven Zustand gesendet wird, wird durch eine jeweilige weitere Angabe der einen oder der mehreren weiteren Angaben ausgelöst, die vom Netzwerkknoten (110) empfangen werden, während die drahtlose Vorrichtung (130) im inaktiven Zustand ist, wobei die jeweilige weitere Angabe eine Downlink-Steuerinformationsnachricht ist.

9. Verfahren nach einem der Ansprüche 1 bis 8, ferner umfassend:

- Empfangen (305) der einen oder der mehreren weiteren Angaben vom Netzwerkknoten (110), und wobei die Übertragung der restlichen Übertragungen auf der einen oder den mehreren empfangenen weiteren Angaben basiert.

10. Verfahren, das von einem Netzwerkknoten (110) durchgeführt wird, wobei das Verfahren zur Handhabung von Uplink-Übertragung von einer drahtlosen Vorrichtung (130) ist, der Netzwerkknoten (110) in einem Drahtloskommunikationsnetzwerk (100) operiert und das Verfahren umfasst:

- Empfangen (403) mindestens einer ersten Übertragung, die eine erste Teilmenge von Daten, die durch die drahtlose Vorrichtung (130) in einem inaktiven Zustand erhalten werden, und eine explizite oder implizite Angabe einer Anzahl von restlichen Übertragungen einer Mehrzahl von Übertragungen umfasst, die zum Senden der restlichen Daten benötigt wird, von der drahtlosen Vorrichtung (130), wobei das Empfangen (403) der mindestens einen ersten Übertragung im inaktiven Zustand durchgeführt wird, und
- Empfangen (406) der restlichen Übertragungen in der Mehrzahl von Übertragungen von der drahtlosen Vorrichtung (130), wobei das Empfangen (406) der restlichen Übertragungen basierend auf einer oder mehreren weiteren Angaben im inaktiven Zustand oder im verbundenen Zustand erfolgt, wobei die eine oder die mehreren weiteren Angaben eines werden von: empfangen vom Netzwerkknoten (110) und konfiguriert an der drahtlosen Vorrichtung (130), wobei mindestens eines von Folgendem:

a) das Verfahren umfasst ferner, dass der Netzwerkknoten (110) eine erste Angabe an die drahtlose Vorrichtung (130) sendet (401), wobei die erste Angabe mindestens eine maximale Anzahl N von Übertragungen angibt, die in der Mehrzahl zugelassen ist, und
b) die eine oder die mehreren weiteren Angaben werden vom Netzwerkknoten (110) gesendet und die eine oder die mehreren weiteren Angaben geben zumindest Transportblockgrößen an, die für die Mehrzahl von Übertragungen verwendet werden dürfen, wobei die Transportblockgrößen UEspezifisch konfiguriert sind und in einem UE-Kontext gespeichert werden und wobei die erste Angabe im inaktiven Zustand gesendet wird.

11. Verfahren nach Anspruch 10, wobei die eine oder die mehreren weiteren Angaben vom Netzwerkknoten (110) gesendet werden und auf der empfangenen expliziten oder impliziten Angabe basieren.

12. Verfahren nach einem der Ansprüche 10 bis 11, ferner umfassend:

- Empfangen (402) einer Präambel von der drahtlosen Vorrichtung (130), wobei die Präambel angibt, ob eine Größe eines Puffers von Daten für die Uplink-Übertragung, die durch die drahtlose Vorrichtung (130) im inaktiven Zustand erhalten werden, kleiner als eine Schwelle ist oder nicht.

13. Drahtlose Vorrichtung (130) zum Handhaben von Uplink-Übertragung an einen Netzwerkknoten (110), wobei die drahtlose Vorrichtung (130) so konfiguriert ist, dass sie in einem Drahtloskommunikationsnetzwerk (100) operiert, und die drahtlose Vorrichtung (130) ferner konfiguriert ist zum:

- Bestimmen, während die drahtlose Vorrichtung (130) so konfiguriert ist, dass sie in einem inaktiven Zustand ist, ob eine Größe eines Puffers von Daten für die Uplink-Übertragung, die so konfiguriert sind, dass sie im inaktiven Zustand erhalten werden, kleiner als eine Schwelle ist oder nicht, und
- Senden mindestens einer ersten Übertragung an den Netzwerkknoten (110), die so konfiguriert ist, dass sie eine erste Teilmenge der erhaltenen Daten und eine explizite oder implizite Angabe einer Anzahl von restlichen Übertragungen einer Mehrzahl von Übertragungen umfasst, die so konfiguriert ist, dass sie zum Senden der restlichen erhaltenen Daten benötigt wird, wobei das Senden der mindestens einen ersten Übertragung so konfiguriert ist, dass es auf einem Ergebnis des Bestimmens resultiert, und so konfiguriert ist, dass es im inaktiven Zustand durchgeführt wird, und
- Senden der restlichen Übertragungen in der Mehrzahl von Übertragungen an den Netzwerkknoten (110), wobei das Senden der restlichen Übertragungen so konfiguriert ist, dass es basierend auf einer oder mehreren weiteren Angaben im inaktiven Zustand oder im verbundenen Zustand erfolgt, wobei die eine oder die mehreren weiteren Angaben so konfiguriert sind, dass sie eines werden von: empfangen vom Netzwerkknoten (110) und konfiguriert an der drahtlosen Vorrichtung (130), wobei mindestens eines von Folgendem:

a) die drahtlose Vorrichtung (130) ist ferner zum Empfangen einer ersten Angabe vom Netzwerkknoten (110) konfiguriert, wobei die erste Angabe so konfiguriert ist, dass sie mindestens eine maximale Anzahl N von Übertragungen angibt, die in der Mehrzahl zugelassen ist, und
b) die eine oder die mehreren weiteren Angaben sind so konfiguriert, dass sie vom Netzwerkknoten (110) empfangen werden, und wobei die eine oder die mehreren weiteren Angaben so konfiguriert sind, dass sie zumindest Transportblockgrößen angeben, die so konfiguriert sind, dass sie für die Mehrzahl von Übertragungen verwendet werden dürfen, wobei die Transportblockgrößen UEspezifisch konfiguriert sind und so konfiguriert sind, dass sie in einem UE-Kontext gespeichert werden, und wobei die erste Angabe so konfiguriert ist, dass sie im inaktiven Zustand empfangen wird.

14. Drahtlose Vorrichtung (130) nach Anspruch 13, wobei die drahtlose Vorrichtung zum Durchführen des Verfahrens nach einem Ansprüche 2 bis 9 ausgelegt ist.

15. Netzwerkknoten (110) zum Handhaben von Uplink-Übertragung von einer drahtlosen Vorrichtung (130), wobei der Netzwerkknoten (110) so konfiguriert ist, dass er in einem Drahtloskommunikationsnetzwerk (100) operiert und der Netzwerkknoten (110) ferner konfiguriert ist zum:

- Empfangen mindestens einer ersten Übertragung, die so konfiguriert ist, dass sie eine erste Teilmenge von Daten, die durch die drahtlose Vorrichtung (130) in einem inaktiven Zustand erhalten werden, und eine explizite oder implizite Angabe einer Anzahl von restlichen Übertragungen einer Mehrzahl von Übertragungen umfasst, die so konfiguriert ist, dass sie zum Senden der restlichen Daten benötigt wird, von der drahtlosen Vorrichtung (130), wobei das Empfangen der mindestens einen ersten Übertragung so konfiguriert ist, dass es im inaktiven Zustand durchgeführt wird, und
- Empfangen der restlichen Übertragungen in der Mehrzahl von Übertragungen von der drahtlosen Vorrichtung (130), wobei das Empfangen der restlichen Übertragungen so konfiguriert ist, dass es basierend auf einer oder mehreren weiteren Angaben im inaktiven Zustand oder im verbundenen Zustand erfolgt, wobei die eine oder die mehreren weiteren Angaben ferner so konfiguriert sind, dass sie eines werden von: empfangen vom Netzwerkknoten (110) und konfiguriert an der drahtlosen Vorrichtung (130), wobei mindestens eines von Folgendem:

a) der Netzwerkknoten (110) ist ferner zum Senden einer ersten Angabe an die drahtlose Vorrichtung (130) konfiguriert, wobei die erste Angabe so konfiguriert ist, dass sie mindestens eine maximale Anzahl N von Übertragungen angibt, die in der Mehrzahl zugelassen ist, und

b) die eine oder die mehreren weiteren Angaben sind so konfiguriert, dass sie vom Netzwerkknoten (110) gesendet werden, und die eine oder die mehreren weiteren Angaben sind so konfiguriert, dass sie zumindest Transportblockgrößen angeben, die so konfiguriert sind, dass sie für die Mehrzahl von Übertragungen verwendet werden dürfen, wobei die Transportblockgrößen UEspezifisch konfiguriert sind und so konfiguriert sind, dass sie in einem UE-Kontext gespeichert werden, und wobei die erste Angabe so konfiguriert ist, dass sie im inaktiven Zustand gesendet wird.

**16.** Netzwerkknoten (110) nach Anspruch 15, wobei der Netzwerkknoten zum Durchführen des Verfahrens nach einem Ansprüche 11 bis 12 ausgelegt ist.

**Revendications**

**1.** Procédé réalisé par un dispositif sans fil (130), le procédé étant destiné à gérer une transmission de liaison montante à un noeud de réseau (110), le dispositif sans fil (130) fonctionnant dans un réseau de communication sans fil (100), et le procédé comprenant :

- la détermination (302), pendant que le dispositif sans fil (130) est dans un état inactif, si une taille d'une mémoire tampon de données pour une transmission de liaison montante obtenues dans un état inactif est ou non inférieure à un seuil, et
- l'envoi (304), au noeud de réseau (110), d'au moins une première transmission comprenant un premier sous-ensemble des données obtenues, et une indication explicite ou implicite d'un nombre de transmissions restantes parmi une pluralité de transmissions qui sont nécessaires pour envoyer les données obtenues restantes, dans lequel l'envoi (304) de l'au moins une première transmission est basé sur un résultat de la détermination (302) et est réalisé dans un état inactif, et
- l'envoi (306), au noeud de réseau (110), des transmissions restantes parmi la pluralité de transmissions, l'envoi (306) des transmissions restantes étant dans un état inactif ou dans un état connecté sur la base d'une ou plusieurs autres indications, les une ou plusieurs autres indications étant l'une parmi : reçues depuis le noeud de réseau (110) et configurées au niveau du dispositif sans fil (130), dans lequel au moins l'un de :

a) le procédé comprend en outre la réception (301) d'une première indication depuis le noeud de réseau (110), la première indication indiquant au moins un nombre maximal, N, de transmissions autorisées dans la pluralité, et
b) les une ou plusieurs autres indications sont reçues depuis le noeud de réseau (110), et les une ou plusieurs autres indications indiquent au moins des tailles de blocs de transport autorisées à être utilisées pour la pluralité de transmissions, dans lequel les tailles de blocs de transport sont configurées spécifiquement par UE et stockées dans un contexte d'UE, et dans lequel la première indication est reçue dans un état inactif.

**2.** Procédé selon la revendication 1, dans lequel les une ou plusieurs autres indications sont reçues depuis le noeud de réseau (110) et sont basées sur l'indication explicite ou implicite envoyée.

**3.** Procédé selon la revendication 1 ou 2, comprenant en outre :

- l'envoi (303) d'un préambule au noeud de réseau (110), le préambule indiquant un résultat de la détermination.

**4.** Procédé selon l'une quelconque des revendications 1 à 3, dans lequel le dispositif sans fil (130) reçoit la première indication depuis le noeud de réseau (110), et dans lequel la première indication indique en outre au moins l'un de :

i. le seuil, et
ii. si une transmission de plus d'une transmission de données dans un état inactif, par exemple un état RRC_INACTIVE, est ou non autorisée.

**5.** Procédé selon l'une quelconque des revendications 1 à 4, dans lequel l'envoi (306) des transmissions restantes est en outre basé sur un ou plusieurs critères sélectionnés parmi :

i. une condition de la liaison radio entre le dispositif sans fil (130) et le noeud de réseau (110) à utiliser pour la transmission des données obtenues,

ii. une taille d'une charge utile d'utilisateur dans les données obtenues,

iii. une deuxième indication de charge d'une cellule (120) dans laquelle le dispositif sans fil (130) doit envoyer les données obtenues,

iv. une autre indication reçue depuis le noeud de réseau (110) .

6. Procédé selon l'une quelconque des revendications 1 à 5, dans lequel les une ou plusieurs autres indications sont reçues depuis le noeud de réseau (110), et dans lequel les une ou plusieurs autres indications indiquent en outre des schémas de codage de modulation autorisés à être utilisés pour la pluralité de transmissions, dans lequel la première indication est reçue dans un état inactif.

7. Procédé selon l'une quelconque des revendications 1 à 6, dans lequel le seuil est sélectionné sur la base d'une condition de la liaison radio entre le dispositif sans fil (130) et le noeud de réseau (110) à utiliser pour la transmission des données obtenues.

8. Procédé selon l'une quelconque des revendications 1 à 7, dans lequel au moins l'un de :

- l'indication implicite du nombre de transmissions restantes comprend un rapport sur la taille de la mémoire tampon, et dans lequel la transmission restante de la pluralité de transmissions est réalisée dans un état inactif,
- une dernière transmission dans le temps de la pluralité de transmissions comprend une troisième indication indiquant qu'une connexion avec le noeud de réseau (110) doit être libérée, et
- chacune des transmissions restantes envoyées dans un état inactif est déclenchée par une autre indication respective, parmi les une ou plusieurs autres indications, reçue du noeud de réseau (110) pendant que le dispositif sans fil (130) est dans un état inactif, l'autre indication respective étant un message d'informations de commande de liaison descendante.

9. Procédé selon l'une quelconque des revendications 1 à 8, comprenant en outre :

- la réception (305) des une ou plusieurs autres indications depuis le noeud de réseau (110), et dans lequel la transmission des transmissions restantes est basée sur les une ou plusieurs autres indications reçues.

10. Procédé réalisé par un noeud de réseau (110), le procédé étant destiné à gérer une transmission de liaison montante depuis un dispositif sans fil (130), le noeud de réseau (110) fonctionnant dans un réseau de communication sans fil (100), et le procédé comprenant :

- la réception (403), depuis le dispositif sans fil (130), d'au moins une première transmission comprenant un premier sous-ensemble de données obtenues par le dispositif sans fil (130) dans un état inactif, et une indication explicite ou implicite d'un nombre de transmissions restantes parmi une pluralité de transmissions qui sont nécessaires pour envoyer les données restantes, dans lequel la réception (403) de l'au moins une première transmission est réalisée dans un état inactif, et
- la réception (406), depuis le dispositif sans fil (130), des transmissions restantes parmi la pluralité de transmissions, la réception (406) des transmissions restantes étant dans un état inactif ou dans un état connecté sur la base d'une ou plusieurs autres indications, les une ou plusieurs autres indications étant l'une parmi : envoyées par le noeud de réseau (110) et configurées au niveau du dispositif sans fil (130), et dans lequel au moins l'un de :

a) le procédé comprend en outre l'envoi (401), par le noeud de réseau (110), d'une première indication au dispositif sans fil (130), la première indication indiquant au moins un nombre maximal, N, de transmissions autorisées dans la pluralité, et

b) les une ou plusieurs autres indications sont envoyées par le noeud de réseau (110), et les une ou plusieurs autres indications indiquent au moins des tailles de blocs de transport autorisées à être utilisées pour la pluralité de transmissions, dans lequel les tailles de blocs de transport sont configurées spécifiquement par UE et stockées dans un contexte d'UE, et dans lequel la première indication est envoyée dans un état inactif.

11. Procédé selon la revendication 10, dans lequel les une ou plusieurs autres indications sont envoyées par le noeud de réseau (110) et sont basées sur l'indication explicite ou implicite reçue.

**12.** Procédé selon la revendication 10 ou 11, comprenant en outre :

- la réception (402) d'un préambule depuis le dispositif sans fil (130), le préambule indiquant si une taille d'une mémoire tampon des données pour une transmission de liaison montante obtenues par le dispositif sans fil (130) dans un état inactif est ou non inférieure à un seuil.

**13.** Dispositif sans fil (130), destiné à gérer une transmission de liaison montante à un noeud de réseau (110), le dispositif sans fil (130) étant configuré pour fonctionner dans un réseau de communication sans fil (100), et le dispositif sans fil (130) étant en outre configuré pour :

- déterminer, pendant que le dispositif sans fil (130) est configuré pour être dans un état inactif, si une taille d'une mémoire tampon de données pour une transmission de liaison montante configurée pour être obtenues dans un état inactif est ou non inférieure à un seuil, et
- envoyer, au noeud de réseau (110), au moins une première transmission configurée pour comprendre un premier sous-ensemble des données obtenues, et une indication explicite ou implicite d'un nombre de transmissions restantes parmi une pluralité de transmissions qui sont configurées pour être nécessaires pour envoyer les données obtenues restantes, dans lequel l'envoi de l'au moins une première transmission est configuré pour être basé sur un résultat de la détermination et est configuré pour être réalisé dans un état inactif, et
- envoyer, au noeud de réseau (110), les transmissions restantes parmi la pluralité de transmissions, l'envoi des transmissions restantes étant configuré pour être dans un état inactif ou dans un état connecté sur la base d'une ou plusieurs autres indications, les une ou plusieurs autres indications étant configurées pour être l'une parmi : reçues depuis le noeud de réseau (110) et configurées au niveau du dispositif sans fil (130), et dans lequel au moins l'un de :

a) le dispositif sans fil (130) est en outre configuré pour recevoir une première indication depuis le noeud de réseau (110), la première indication étant configurée pour indiquer au moins un nombre maximal, N, de transmissions configurées pour être autorisées dans la pluralité, et
b) les une ou plusieurs autres indications sont configurées pour être reçues depuis le noeud de réseau (110), et dans lequel les une ou plusieurs autres indications sont configurées pour indiquer au moins des tailles de blocs de transport configurées pour être autorisées à être utilisées pour la pluralité de transmissions, dans lequel les tailles de blocs de transport sont configurées spécifiquement par UE et configurées pour être stockées dans un contexte d'UE, et dans lequel la première indication est configurée pour être reçue dans un état inactif.

**14.** Dispositif sans fil (130) selon la revendication 13, dans lequel le dispositif sans fil est apte à réaliser le procédé selon l'une quelconque des revendications 2 à 9.

**15.** Noeud de réseau (110), pour gérer une transmission de liaison montante depuis un dispositif sans fil (130), le noeud de réseau (110) étant configuré pour fonctionner dans un réseau de communication sans fil (100), et le noeud de réseau (110) étant en outre configuré pour :

- recevoir, depuis le dispositif sans fil (130), au moins une première transmission configurée pour comprendre un premier sous-ensemble de données configurées pour être obtenues par le dispositif sans fil (130) dans un état inactif, et une indication explicite ou implicite d'un nombre de transmissions restantes parmi une pluralité de transmissions qui sont configurées pour être nécessaires pour envoyer les données restantes, dans lequel la réception de l'au moins une première transmission est configurée pour être réalisée dans un état inactif, et
- recevoir, depuis le dispositif sans fil (130), les transmissions restantes parmi la pluralité de transmissions, la réception des transmissions restantes étant configurée pour être dans un état inactif ou dans un état connecté sur la base d'une ou plusieurs autres indications, les une ou plusieurs autres indications étant configurées pour être l'une parmi : envoyées par le noeud de réseau (110) et configurées au niveau du dispositif sans fil (130), et dans lequel au moins l'un de :

a) le noeud de réseau (110) est en outre configuré pour envoyer une première indication au dispositif sans fil (130), la première indication étant configurée pour indiquer au moins un nombre maximal, N, de transmissions autorisées dans la pluralité, et
b) les une ou plusieurs autres indications sont configurées pour être envoyées par le noeud de réseau (110), et les une ou plusieurs autres indications sont configurées pour indiquer au moins une taille de bloc de transport configurée pour être autorisée à être utilisée pour la pluralité de transmissions, dans lequel les tailles de blocs de transport sont configurées spécifiquement par UE et configurées pour être stockées dans un contexte d'UE, et dans lequel la première indication est configurée pour être envoyée dans un état inactif.

16. Noeud de réseau (110) selon la revendication 15, dans lequel le noeud de réseau est apte à réaliser le procédé selon la revendication 11 ou 12.

**Figure 1**

**a)**

**b)**

**Figure 2**

```
                    ┌─────────┐
                    │  Start  │──────────────────┐
                    └────┬────┘                  │
            ┌────────────▼─────────────────┐     │
            ┆ 301.  Receive the first      ┆     │
            ┆          indication          ┆     │
            └────────────┬─────────────────┘     │
    ┌────────────────────▼─────────────────────┐ │
    │ 302. Determine if the size of the buffer │ │
    │       is smaller than the threshold      │ │
    └────────────────────┬─────────────────────┘ │
            ┌────────────▼─────────────────┐      │
            ┆  303. Send the preamble      ┆      │
            └────────────┬─────────────────┘      │
    ┌────────────────────▼─────────────────────┐  │
    │ 304.  Send the at least first transmission│─┐
    └────────────────────┬─────────────────────┘ ││
    ┌────────────────────▼─────────────────────┐ ││
    ┆ 305. Receive the one or more further      ┆ ││
    ┆         indications                       ┆ ││
    └────────────────────┬─────────────────────┘ ││
    ┌────────────────────▼─────────────────────┐ ││
    │ 306. Send the remaining transmissions     │◄┘│
    └────────────────────┬─────────────────────┘  │
                    ┌────▼────┐                    │
                    │   End   │                    │
                    └─────────┘                    │
```

# Figure 3

Figure 4

# SDT with subsequent data

## Legacy procedure

**Figure 5**

# SDT with subsequent data

**Figure 6**

**a)**

Wireless device <u>130</u>

┌─────────────────────────────┐
│ <u>701</u>. Determining unit │
└─────────────────────────────┘
┌─────────────────────────────┐
│ <u>702</u>. Sending unit     │
└─────────────────────────────┘
┌─────────────────────────────┐
│ <u>703</u>.Receiving unit    │
└─────────────────────────────┘
┌─────────────────────────────┐
│ <u>704</u>. Other units      │
└─────────────────────────────┘

<u>705</u>. Processor

<u>707</u>. Receiving port

<u>706</u>. Memory

<u>708</u>. Sending port

<u>710</u>  COMPUTER-READABLE MEDIUM ← PROGRAM  <u>709</u>

**b)**

Wireless device <u>130</u>

<u>707</u>. Receiving port

<u>711</u>. Radio circuitry

<u>705</u>. Processing circuitry

<u>706</u>. Memory

<u>708</u>. Sending port

<u>710</u>  COMPUTER-READABLE MEDIUM ← PROGRAM  <u>709</u>

# Figure 7

**a)**

Network node 110

801. Receiving unit

802. Sending unit

803. Determining unit

804. Other units

805. Processor

807. Receiving port

806. Memory

808. Sending port

810 — COMPUTER-READABLE MEDIUM ← PROGRAM — 809

**b)**

Network node 110

811. Radio circuitry

805. Processing circuitry

807. Receiving port

806. Memory

808. Sending port

810 — COMPUTER-READABLE MEDIUM ← PROGRAM — 809

# Figure 8

FIG. 9

FIG. 10

BEGIN

1110
Host computer
provides user
data

◄──────► 1111
Host computer
executes host
application

1120
Host computer
initiates
transmission
carrying the
user data to
the UE

1130
Base station
transmits the
user data

1140
UE executes
client
application

END

FIG. 11

BEGIN

1210
Host computer
provides user
data

1220
Host computer
initiates
transmission
carrying the
user data to
the UE

1230
UE receives
the user data

END

FIG. 12

BEGIN

**1310**
UE receives input data provided at host computer

**1311**
UE executes client application

**1320**
UE provides user data

**1321**
UE executes client application

**1330**
UE initiates transmission of the user data to the host computer

**1340**
Host computer receives user data transmitted from the UE

END

**FIG. 13**

BEGIN

**1410**
Base station receives user data from UE

**1420**
Base station initiates transmission of user data to the host computer

**1430**
Host computer receives the user data

END

**FIG. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **SAMSUNG.** Overall procedure for data transfer in inactive state. *R2-168051,* 04 November 2016, vol. RAN WG2 (Reno, USA

- **QUALCOMM INCORPORATED.** RACH based NR small data transmission. *3GPP DRAFT; R2-2007540, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 07 August 2020, vol. RAN WG2 (Online